# EUROPEAN PATENT SPECIFICATION

(11) **EP 3 489 007 B1**
(45) Date of publication and mention of the grant of the patent: **04.08.2021**
(21) Application number: 17830793.0
(22) Date of filing: 27.06.2017
(51) Int. Cl.: B32B 37/14

(54) **METHOD FOR MANUFACTURING SANDWICH PANEL, SANDWICH PANEL, COMPOSITE MATERIAL SHEET, AND CURVED PANEL MEMBER**
VERFAHREN ZUR HERSTELLUNG EINER SANDWICHPLATTE, SANDWICHPLATTE, VERBUNDSTOFFMATERIALBOGEN UND GEKRÜMMTES PLATTENELEMENT
PROCÉDÉ DE FABRICATION D'UN PANNEAU SANDWICH, PANNEAU SANDWICH, FEUILLE EN MATÉRIAU COMPOSITE ET ÉLÉMENT DE PANNEAU INCURVÉ

(30) Priority: 22.07.2016 JP 2016144212; 07.02.2017 JP 2017020357; 09.02.2017 JP 2017021964; 09.02.2017 JP 2017021965
(43) Date of publication of application: 29.05.2019
(73) Proprietor: Sumitomo Bakelite Co., Ltd., Shinagawa-ku Tokyo 140-0002 (JP)
(72) Inventor: UESAKA Masao, Tokyo 140-0002 (JP); HONJOYA Tomoyoshi, Tokyo 140-0002 (JP)
(74) Representative: Ter Meer Steinmeister & Partner
(86) International application number: PCT/JP2017/023578
(87) International publication number: WO 2018/016273

(56) References cited:
- EP-A1- 1 803 551
- JP-A- H0 459 248
- JP-A- H04 276 435
- JP-A- H04 276 435
- JP-A- H07 149 927
- JP-A- S61 246 057
- JP-A- S63 230 330
- JP-A- S63 281 836
- JP-A- 2000 238 154
- JP-A- 2003 128 936
- JP-A- 2005 066 967

## Description

### TECHNICAL FIELD

The present invention relates to a method for manufacturing a sandwich panel, a sandwich panel, a composite material sheet, and a curved panel member.

### BACKGROUND ART

As a method for manufacturing a sandwich panel made up of a prepreg and a honeycomb core, a variety of methods have been disclosed. As an ordinary method, there is a method in which an autoclave is used. As a main technique, for example, there is a technique descried in Patent Document 1. According to the same publication, it is described that two sheets of a prepreg obtained by impregnating a plain weave-like carbon fiber with an epoxy resin composition are laminated together, the laminate is disposed on both surfaces of a honeycomb core and then put into a vacuum bag, and the laminate and the honeycomb core are heated, cured, and adhered to each other in an autoclave, thereby obtaining a sandwich panel. The above-described method for manufacturing a sandwich panel is, generally, manually carried out.

Another method for producing a sandwich structure is known from Patent Document 2. The sandwich structure which is produced according to this method comprises a core component and one each fiber reinforced component composed of continuous reinforcing fibers and a matrix resin and disposed on both surfaces of the core component, in which the core component has voids, a thickness of 0.1 to 1.5 mm and a specific gravity of 0.01 to 1.2; and the adhesive strength between the core component and the fiber reinforced component measured according to ASTM D 3846 is 1 MPa or more.

Patent Document 3 discloses a sandwich panel which is light-weight but provides strength and rigidity and adhesion between its surface material and core material. This panel is composed of core material and surface material, and cloth and UD prepreg sheet with the tensile strength of at least 30kg/25mm are laminated on each other in this order from the core-side.

### RELATED DOCUMENT

### PATENT DOCUMENT

[Patent Document 1] Japanese Unexamined Patent Publication No. 2011-140596
[Patent Document 2] EP 1 803 551 A1
[Patent Document 3] JP H04 276435 A

### SUMMARY OF THE INVENTION

In a method for manufacturing a sandwich panel of the related art, there was room for the improvement of the flatness of the surface of the sandwich panel.

In addition, in the method for manufacturing a sandwich panel of the related art, there was room for the improvement of the productivity of the sandwich panel.

In addition, it was clarified that, the prepreg of the related art in which a plain weave-like carbon fiber was laminated had room for the improvement of the workability.

In a number of methods for manufacturing a sandwich panel of the related art, a method in which an autoclave is used as in Patent Document 1 was used. However, the present inventors' studies showed that, in the case of using an autoclave, there was a case in which a rough protrusion and recess surface was formed on the surface of a sandwich panel after the autoclave, a hole was formed on the surface, or a part of the surface was lost.

Therefore, an operation for, once again, filling the protrusion and the recess, the hole, or the partial loss in the surface of the obtained sandwich panel with the resin that was used for the prepreg was required. Generally, the filling was carried out manually, which degraded the productivity.

Meanwhile, the use of a method in which a paper phenol plate is pressed to the laminate and the paper phenol plate and the laminate are pressed together without using the autoclave is also considered. Even in the case of using the paper phenol plate, it was not possible to make the surface roughness of the sandwich panel sufficiently smooth.

The present inventors paid attention to the surface flatness of a sandwich panel, carried out intensive studies, and consequently found that, when a metal plate having a flat surface is used as a pressing plate, and a core layer and a prepreg are heated and pressurized while bringing the flat surface of the metal plate into contact with the prepreg, thereby forming a sandwich panel, it is possible to improve the flatness of the surface.

According to the present invention,
a method for manufacturing a sandwich panel
as defined in the appended claims is provided.

In addition, the present inventors paid attention to the surface flatness of a sandwich panel, carried out intensive studies, and consequently found that, when a metal plate is used as a pressing plate, and a core layer and a prepreg are heated and pressurized while pressing the metal plate pressed through a cushion layer to the prepreg, thereby forming a sandwich panel, the variation in a stress being applied to the metal plate is suppressed, and it is possible to improve the flatness of the surface of a resin plate made of a cured substance of the prepreg.

In a number of methods for manufacturing a sandwich panel of the related art, a method in which an autoclave is used as in Patent Document 1 was used. However, as described above, generally, the filling of the surface of the obtained sandwich panel was carried out manually, which degraded the productivity.

In addition, a process of forming a surface material on the surface of the sandwich panel was carried out after a curing step in which an autoclave was used.

In contrast, the present inventors found that, when a sheet-like core layer having a honeycomb structure, sheet-like prepregs, and a thermoplastic resin sheet are collectively molded, the productivity of the sandwich panel can be improved.

It was clarified that the prepreg of the related art in which a plain weave-like carbon fiber is laminated had room for the improvement of the workability.

On the basis of the above-described circumstances, the present inventors carried out intensive studies regarding a composite material sheet including a plurality of sheet-like fiber base materials and a thermosetting resin composition and consequently found that the joint use of a fabric-like fiber cloth and a knit-like fiber knit enables the easy obtainment of the composite material sheet and the enhancement of the bending workability.

### BRIEF DESCRIPTION OF THE DRAWINGS

The above-described object, other objects, characteristics, and advantages will be further clarified using a preferred embodiment described below and the accompanying drawings below.
Fig. 1 is a step cross-sectional view showing an example of a method for manufacturing a sandwich panel according to the present embodiment.
Fig. 2 is a schematic view showing an example of a sandwich panel according to the present embodiment.
Fig. 3 is a step cross-sectional view showing an example of the method for manufacturing a sandwich panel according to the present embodiment.
Fig. 4 is a schematic view showing an example of the sandwich panel according to the present embodiment.
Fig. 5 is a step cross-sectional view showing an example of a method for manufacturing a sandwich panel according to a third embodiment.
Fig. 6 is a schematic view showing an example of a sandwich panel according to the third embodiment.
Fig. 7 is a schematic view showing a modification example of the sandwich panel according to the third embodiment.
Fig. 8 is a cross-sectional view showing an outline of an example of a composite material sheet according to the present embodiment.
Fig. 9 is a step cross-sectional view showing an example of the method for manufacturing a sandwich panel according to the present embodiment.
Fig. 10 is a schematic view showing an outline of an example of the sandwich panel according to the present embodiment.

### DESCRIPTION OF EMBODIMENTS

Hereinafter, embodiments of the present invention will be described using drawings. Meanwhile, in all of the drawings, similar constituent elements will be given a common reference sign and will not be repeated. It has to be noted that the invention is defined in the appended claims. Any disclosure lying outside the scope of said claims is only intended for illustrative as well as comparative purposes.

### (First embodiment, which is not according to the present invention)

Hereinafter, a method for manufacturing a sandwich panel of a first embodiment will be described.

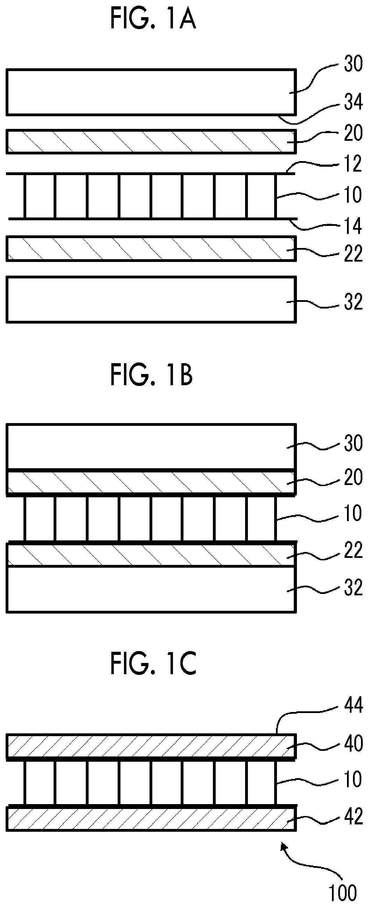

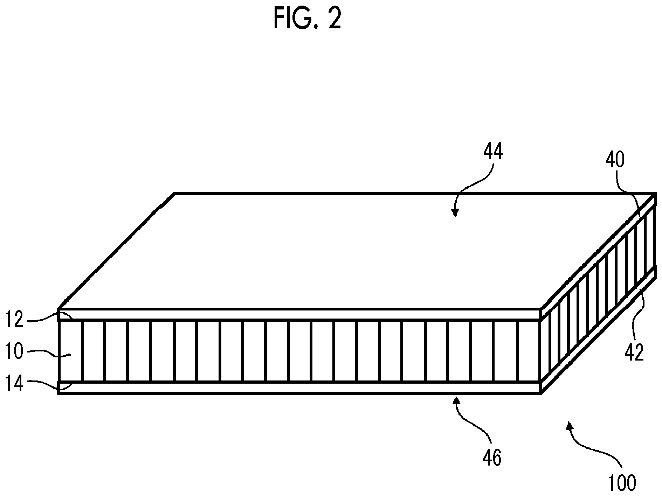

Fig. 1 is a step cross-sectional view showing an example of the method for manufacturing a sandwich panel 100 according to the first embodiment. Fig. 2 is a schematic view of the sandwich panel 100 of the first embodiment which is obtained using the method for manufacturing the sandwich panel 100.

The method for manufacturing the sandwich panel 100 of the present embodiment is capable of including a preparation step of preparing a sheet-like core layer 10 having a honeycomb structure and sheet-like prepregs 20 and 22, a disposition step of disposing the prepregs 20 and 22 on opening surfaces of the core layer 10 on an upper surface 12 side and a lower surface 14 side respectively, and a step of heating and pressurizing the core layer 10 and the prepregs 20 and 22 while pressing flat surfaces of metal plates 30 and 32 that are pressing plates to the prepregs 20 and 22 and then separating the metal plates 30 and 32 from resin plates 40 and 42 made of cured substances of the prepregs 20 and 22, thereby obtaining the sandwich panel 100.

According to the present embodiment, it is possible to join the prepregs 20 and 22 and the core layer 10 while pressing the flat surfaces of the metal plates 30 and 32 to the surfaces of the prepregs 20 and 22. Therefore, flat surfaces are formed on surfaces (an upper surface 44 of the resin plate 40 and a lower surface 46 of the resin plate 42) of the resin plates 40 and 42 formed by the curing of the prepregs 20 and 22. The surfaces of the resin plates 40 and 42 can be used as contact surfaces to which the flat surfaces of the metal plates 30 and 32 are pressed. Therefore, it is possible to obtain the sandwich panel 100 having smooth surfaces (the upper surface 44 of the resin plate 40 and the lower surface 46 of the resin plate 42).

The sandwich panel 100 obtained using the manufacturing method of the present embodiment is excellent in terms of the designability and the heat resistance and is thus can be used as a panel for an aircraft.

Next, the respective steps of the method for manufacturing the sandwich panel 100 will be described in detail.

First, the core layer 10, the prepregs 20 and 22, and the metal plates 30 and 32, which are shown in Fig. 1A, are prepared.

The core layer 10 is a sheet-like plate member which is divided by a plurality of wall portions and has a plurality of through-holes formed to penetrate the core layer from the upper surface 12 through the lower surface 14. The core layer 10 has a honeycomb structure that is divided by the wall portions. In the present embodiment, as the core layer 10, other structures may also be used instead of the honeycomb structure as long as the structure has a high strength and a lightweight property.

Examples of a constituent material of the core layer 10 include an aramid fiber, paper, balsa wood, plastic, aluminum, titanium, glass, alloy thereof, and the like. From the viewpoint of the heat resistance, the core layer 10 preferably includes an aramid fiber as the constituent material.

The film thickness of the core layer 10 is not particularly limited and may be equal to or more than 1 mm and equal to or less than 50 mm, may be equal to or more than 3 mm and equal to or less than 40 mm, and may be equal to or more than 5 mm and equal to or less than 30 mm.

The size of each core cell in the core layer 10 is not particularly limited, and one side can be set to, for example, equal to or more than 1 mm and equal to or less than 10 mm.

The area of the surfaces (the upper surface 12 and the lower surface 14) of the core layer 10 is not particularly limited, and the core layer may have surfaces as large as one sandwich panel or may have a surface area that is equal to the sum of the surfaces of a plurality of sandwich panels. In such a case, it becomes possible to dice one sandwich panel 100 and cut out and obtain a plurality of panels, and the productivity can be improved. For example, the area of the surfaces (the upper surface 12 and the lower surface 14) of the core layer 10 can be set to a large area and may be, for example, equal to or larger than 1 m².

In addition, from the viewpoint of improving the corrosion resistance or the heat resistance, a variety of surface treatments may be carried out on the inside and/or the outside of the core layer 10.

As the prepregs 20 and 22, it is possible to use, for example, a sheet member in a B-stage state which is formed by soaking a thermosetting resin composition into a fiber base material. The B-stage state refers to a state in which the rate of reaction of a thermosetting resin in the thermosetting resin composition soaking into the fiber base material, which is computed from the measurement result using a differential scanning calorimeter (DSC), is more than 0% to equal to or less than 60%, preferably equal to or more than 0.5% and equal to or less than 55%, and still more preferably equal to or more than 1% and equal to or less than 50%.

The thermosetting resin composition in the present embodiment includes a thermosetting resin. As the thermosetting resin, for example, a phenol resin, an unsaturated polyester resin, or an epoxy resin can be included. From the viewpoint of the peeling property between the metal plates 30 and 32 and the resin plates 40 and 42, the thermosetting resin composition in the present embodiment preferably includes a phenol resin.

In addition, the upper limit value of the glass transition temperature (Tg) of a cured substance of the thermosetting resin composition is, for example, equal to or lower than 250°C, preferably equal to or lower than 220°C, and more preferably equal to or lower than 200°C. In such a case, it is possible to carry out a heating and pressurization treatment under a low-temperature condition. On the other hand, the lower limit value of the glass transition temperature (Tg) maybe, for example, equal to or higher than 110°C or equal to or higher than 120°C. In such a case, it is possible to improve the thermal time characteristics.

In addition, the thermosetting resin composition is capable of including other additives in addition to the thermosetting resin. The additives are not particularly limited, and examples thereof include fillers such as inorganic fillers, rubber, thermoplastic resins, and the like.

As the fiber base material, it is possible to use an aramid fiber, a polyester fiber, a polyphenylene sulfide fiber, a carbon fiber, a graphite fiber, a glass fiber, a silicon carbide fiber, or the like. From the viewpoint of the heat resistance, the fiber base material is capable of including a glass fiber.

The metal plates 30 and 32 are metal pressing members having a surface 34 that is a flat surface. Specifically, the upper limit value of the surface roughness Rz of a contact surface (the surface 34) of the metal plate 30 which comes into contact with the prepreg 20 or 22 is, for example, equal to or less than 5.0 µm, preferably equal to or less than 4.0 µm, and more preferably equal to or less than 3.0 µm. In such a case, it is possible to further improve the surface flatness of the surface of the prepreg 20 or 22 to which the surface 34 of the metal plate 30 is pressed. On the other hand, the lower limit value of the surface roughness Rz is not particularly limited and can be set to, for example, equal to or more than 0.5 µm. In such a case, it is possible to improve the peeling property between the metal plates 30 and 32 and the resin plates 40 and 42.

In the present embodiment, the surface roughness Rz refers to a ten-point average roughness and can be measured according to JIS B0601.

As the metal plates 30 and 32, it is possible to use an SUS plate, a tinned plate, an aluminum plate, a magnesium plate, or the like. From the viewpoint of the thermal conductivity or small warpage under heat, the metal plates 30 and 32 are preferably an SUS plate.

The film thicknesses of the metal plates 30 and 32 are not particularly limited and, for example, may be equal to or more than 0.5 mm and equal to or less than 10 mm, may be equal to or more than 0.8 mm and equal to or less than 5 mm, or may be equal to or more than 1.0 mm and equal to or less than 2.0 mm. When the film thickness is set in the above-described range, it is possible to achieve the balance between the stiffness and the thermal conductivity.

Subsequently, as shown in Fig. 1A, the prepregs 20 and 22 in a B-stage state are disposed on the opening surfaces of the core layer 10 on the upper surface 12 side and the lower surface 14 side respectively. Therefore, a laminate including the core layer 10 and the prepregs 20 and 22 is formed. The prepregs 20 and 22 are capable of covering all of the surfaces (the upper surface 12 and the lower surface 14) of the core layer 10. In the present embodiment, the number of the prepregs 20 and 22 being laminated may be one or plural. In addition, a different functional layer may be disposed between the core layer 10 and the prepregs 20 and 22. As the different functional layer, it is possible to use, for example, a foamed layer constituted of a thermosetting resin.

Subsequently, as shown in Fig. 1A, a lower surface of the laminate is disposed on the metal plate 32, and the metal plate 30 is disposed on an upper surface of the laminate.

Subsequently, as shown in Fig. 1B, the core layer 10 and the prepregs 20 and 22 are heated and pressurized while bringing the flat surfaces (the surfaces 34) of the metal plates 30 and 32 into contact with the prepregs 20 and 22. Therefore, a curing treatment of the prepregs 20 and 22 is carried out, and the resin plates 40 and 42 can be formed. For the heating and pressurization, it is possible to employ conditions of, for example, 110°C to 140°C, 30 minutes to 90 minutes, and 0.35 MPa to 2.0 MPa.

In the present embodiment, it is possible to cure the prepregs 20 and 22 in a state in which the surfaces 34 which are the flat surfaces of the flat plate-like metal plates 30 and 32 are caused to press (come into contact with and pressurize) the surfaces of the prepregs 20 and 22. Therefore, it becomes possible to form the surfaces of the resin plates 40 and 42 which are the cured substances of the prepregs 20 and 22 as flat surface having no protrusions and recesses. In addition, the metal plates 30 and 32 are constituted of a metallic material having a high thermal conductivity, and thus it becomes possible to cause a curing reaction to progress uniformly throughout the entire prepregs 20 and 22, and the surface variation of the resin plates 40 and 42 is suppressed.

Here, in the case of using a method of the related art in which an autoclave or paper phenol is used as described above, protrusions and recesses, holes, losses, or the like are generated on the surfaces of the resin plates which are cured substances of the prepregs.

In contrast, according to the present embodiment, it is possible to suppress the generation of protrusions and recesses, holes, losses, or the like are generated on the surfaces of the above-described resin plates 40 and 42. In addition, according to the present embodiment, a step of filling protrusions and recesses, holes, losses, or the like generated on the surfaces with a resin becomes unnecessary, and thus it is possible to improve the productivity.

In addition, the heating and pressurization step is not carried out in a vacuum such as an autoclave of the related art and can be carried out in the atmosphere. Therefore, it is possible to improve the productivity.

In addition, in the present embodiment, the heating and pressurization step of the prepregs 20 and 22 and the core layer 10 can be automated using a machine instead of being carried out manually, and thus it is possible to significantly enhance the continuous productivity. For example, in the case of using a mechanical press, the above-described curing treatment can be carried out by pressurizing (pressing) and heating the metal plates 30 and 32 in a state in which the metal plates 30 and 32 are interposed between a press plate of the mechanical press and the prepregs 20 and 22. In addition, according to the present embodiment, it is possible to automate a series of steps from the preparation step or disposition step of the core layer 10, the prepregs 20 and 22, and the metal plates 30 and 32 through the heating and pressurization step.

In the heating and pressurization step in the present embodiment, the lower limit value of a pressurization force of the metal plates 30 and 32 may be set to, for example, equal to or more than 0.35 MPa, may be set to equal to or more than 0.4 MPa, or may be set to equal to or more than 0.5 MPa. In such a case, it is possible to further improve the surface flatness of the surfaces (the upper surface 44 and the lower surface 46) of the resin plates 40 and 42 of the prepregs 20 and 22 to be obtained. On the other hand, the upper limit value of the pressurization force is not particularly limited and may be set to, for example, equal to or more than 2.0 MPa, may be set to equal to or more than 1.7 MPa, or may be set to equal to or more than 1.5 MPa. In such a case, it is possible to obtain the sandwich panel 100 while maintaining the structure of the core layer 10. In addition, when the heating and pressurization step is carried out at a low pressure as described above, the disposition of spacers between the metal plates 30 and 32 and the laminate becomes unnecessary, and it is possible to enhance the productivity.

In the heating and pressurization step in the present embodiment, the lower limit value of the heating temperature may be set to, for example, equal to or higher than 110°C, may be set to equal to or higher than 115°C, or may be set to equal to or higher than 120°C. In such a case, it is possible to enhance the mechanical properties of the resin plates 40 and 42 of the prepregs 20 and 22. On the other hand, the upper limit value of the heating temperature may be set to, for example, equal to or lower than 140°C, may be set to equal to or lower than 135°C, or may be set to equal to or lower than 130°C. In such a case, it is possible to suppress the carbonization of the thermosetting resin constituting the prepregs 20 and 22. In addition, it is possible to suppress the curing shrinkage in the cured substances of the prepregs 20 and 22 and suppress the occurrence of an excessive dimensional change.

In addition, during the heating and pressurization of the prepregs 20 and 22, the resin constituting the prepregs 20 and 22 that are pressed to the metal plates 30 and 32 may be moved onto an inner wall surface of the honeycomb structure of the core layer 10. In such a case, in a structure in which the resin plates 40 and 42 are joined to both surfaces of the core layer 10, the resin constituting the resin plates 40 and 42 is continuously formed so as to coat the resin plates 40 and 42 and a part of an upper end portion or a lower end portion of the inner wall of the core layer 10. However, the entire inside of the core layer 10 is not filled with the resin constituting the resin plates 40 and 42 in the structure. Therefore, it is possible to obtain the sandwich panel 100 having a structure being excellent in terms of the strength and the lightweight property.

After that, as shown in Fig. 1C, the metal plates 30 and 32 are separated from the resin plates 40 and 42 made of the cured substances of the prepregs 20 and 22.

In the present embodiment, an adhesive layer that joins the core layer 10 and the prepreg 20 or 22 may not be disposed therebetween. Since the prepregs 20 and 22 including the thermosetting resin are used, the prepregs 20 and 22 can be adhered to the core layer 10, the adhesive layer becomes unnecessary. Therefore, it is possible to improve the productivity.

In addition, in the present embodiment, a mold release layer (for example, a peeling film) for facilitating the release of the metal plate 30 or 32 from the prepreg 20 or 22 or vice versa may not be disposed therebetween. Since the prepregs 20 and 22 including the phenol resin are used, it is possible to improve the release property of the resin plates 40 and 42 which are the cured substances of the prepregs 20 and 22 and the metal plates 30 and 32, and thus the mold release layer becomes unnecessary. Therefore, it is possible to further improve the flatness of the surfaces of the resin plates 40 and 42. In addition, it is possible to improve the productivity of the manufacturing method of the present embodiment.

With the above-described steps, the plate-like sandwich panel 100 as shown in Fig. 2 can be obtained. The surface of the sandwich panel 100 may also be constituted of a flat surface having no curved surface.

Meanwhile, in the case of obtaining the sandwich panel 100 having a large area, the method for manufacturing the sandwich panel 100 of the present embodiment is capable of subsequently including a step of cutting the sandwich panel 100. In such a case, it is possible to a plurality of diced sandwich panels 100. In addition, it is also possible to obtain a sandwich panel 100 cut into a desired shape.

The sandwich panel 100 of the present embodiment is capable of including, as shown in Fig. 2, the core layer 10 having a honeycomb structure and the resin plates 40 and 42 provided on both surfaces (the upper surface 12 and the lower surface 14) of the core layer 10. The number of the resin plates 40 and 42 provided may be plural. In addition, a different functional layer may also be interposed between the core layer 10 and the resin plate 40 or 42.

In the sandwich panel 100 of the present embodiment, the upper limit value of the surface roughness Rz of the surfaces (the upper surface 44 and the lower surface 46) of the resin plates 40 and 42 is, for example, equal to or less than 30.0 µm, preferably equal to or less than 25.0 µm, and more preferably equal to or less than 20.0 µm. For example, it is possible to further improve the flatness of the outer surfaces of the resin plates 40 and 42 which are the outermost layers . On the other hand, the lower limit value of the surface roughness Rz is not particularly limited and can be set to, for example, equal to or more than 0.5 µm.

In addition, the resin plates 40 and 42 are capable of containing the fiber base material. Therefore, it is possible to further improve the heat resistance of the sandwich panel 100. In addition, the linear expansion coefficient difference between the resin plates 40 and 42 and the core layer 10 can be decreased, and thus it is possible to suppress the warpage of the sandwich panel 100.

In addition, in the sandwich panel 100 of the present embodiment, the resin constituting the resin plates 40 and 42 may also be formed on the inner wall surface of the honeycomb structure of the core layer 10. The resin constituting the resin plates 40 and 42 is constituted to coat the upper end portion or the lower end portion in the inner wall surface, whereby it is possible to improve the joint strength between the resin plates 40 and 42 and the core layer 10.

The sandwich panel 100 of the present embodiment is excellent in terms of the heat resistance and the designability. In addition, the core layer 10 has a honeycomb structure, and thus it is possible to produce the sandwich panel 100 being lightweight and having a high strength. Therefore, the sandwich panel 100 of the present embodiment can be preferably used for aircraft panels. For example, the sandwich panel 100 can be used for aircraft interiors such as toilets or partitions or equipment in aircrafts such as wagon chasses.

### (Second embodiment, which is not according to the present invention)

Hereinafter, a method for manufacturing a sandwich panel of a second embodiment will be described.

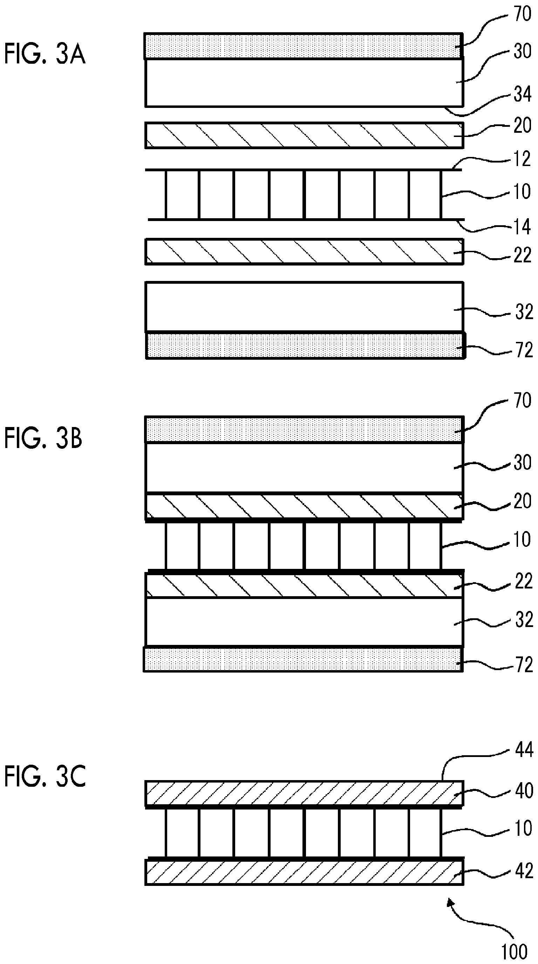

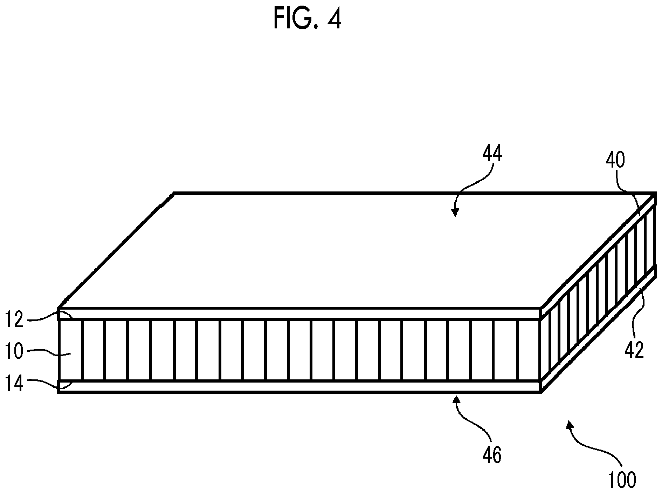

Fig. 3 is a step cross-sectional view showing an example of the method for manufacturing a sandwich panel 100 according to the second embodiment. Fig. 4 is a schematic view of the sandwich panel 100 of the second embodiment which is obtained using the method for manufacturing the sandwich panel 100.

The method for manufacturing the sandwich panel 100 of the second embodiment is capable of including a preparation step of preparing a sheet-like core layer 10 having a honeycomb structure and sheet-like prepregs 20 and 22, a disposition step of disposing the prepregs 20 and 22 on opening surfaces of the core layer 10 on an upper surface 12 side and a lower surface 14 side respectively, and a step of heating and pressurizing the core layer 10 and the prepregs 20 and 22 while bringing metal plates 30 and 32 that are pressed through cushion layers 70 and 72 into contact with the prepregs 20 and 22 and then separating the metal plates 30 and 32 from resin plates 40 and 42 made of cured substances of the prepregs 20 and 22, thereby obtaining the sandwich panel 100.

According to the second embodiment, the metal plates 30 and 32 can be pressed through the cushion layers 70 and 72, and thus it is possible to suppress the variation of stresses being applied to the metal plates 30 and 32. Therefore, the prepregs 20 and 22 cure in a state in which the surfaces of the metal plates 30 and 32 are in contact with the prepregs, and thus the surfaces of the resin plates 40 and 42 that are substances cured as described above are capable of having a favorable flatness. Therefore, it is possible to realize the sandwich panel 100 having a smooth surface. In addition, the pressing force becomes uniform due to the cushion layers 70 and 72, and the generation of a portion to which the resin is not adhered by pressure can be suppressed, and thus it is possible to realize a structure having an excellent moldability.

In addition, according to the second embodiment, it is possible to join the prepregs 20 and 22 and the core layer 10 while pressing the flat surfaces of the metal plates 30 and 32 to the surfaces of the prepregs 20 and 22. Therefore, flat surfaces are formed on surfaces (an upper surface 44 of the resin plate 40 and a lower surface 46 of the resin plate 42) of the resin plates 40 and 42 formed by the curing of the prepregs 20 and 22. The surfaces of the resin plates 40 and 42 are contact surfaces to which the flat surfaces of the metal plates 30 and 32 are pressed. The sandwich panel 100 having smooth surfaces (the upper surface 44 of the resin plate 40 and the lower surface 46 of the resin plate 42) can be obtained in the above-described manner.

The sandwich panel 100 obtained using the manufacturing method of the second embodiment is excellent in terms of the designability and the heat resistance and is thus can be used as a panel for an aircraft.

Next, the respective steps of the method for manufacturing the sandwich panel 100 of the second embodiment will be described in detail. Meanwhile, to the method for manufacturing the sandwich panel 100 of the second embodiment, the manufacturing order, the manufacturing conditions, the materials, or the like of the method for manufacturing the sandwich panel 100 of the first embodiment can be applied except for the fact that the metal plates 30 and 32 are pressed through the cushion layers 70 and 72.

First, the core layer 10, the prepregs 20 and 22, and the metal plates 30 and 32, which are shown in Fig. 3A, are prepared. The prepregs 20 and 22 in a B-stage state are disposed on the opening surfaces of the core layer 10 on the upper surface 12 side and the lower surface 14 side respectively.

Subsequently, the metal plates 30 and 32 are pressed through the cushion layers 70 and 72 as shown in Fig. 3B. The core layer 10 and the prepregs 20 and 22 are heated and pressurized while maintaining the flat surfaces (the surfaces 34) of the metal plates 30 and 32 in a state of being pressed through the cushion layers 70 and 72 in contact with the prepregs 20 and 22. Therefore, a curing treatment of the prepregs 20 and 22 is carried out, and the resin plates 40 and 42 can be formed. For the heating and pressurization, it is possible to employ conditions of, for example, 110°C to 140°C, 30 minutes to 90 minutes, and 0.35 MPa to 2.0 MPa.

Meanwhile, as shown in Fig. 3B, the cushion layers 70 and 72 may also be disposed on the metal plates 30 and 32 on the upper surface side and the lower surface side respectively, but the cushion layer may also be disposed only on one surface side.

In the second embodiment, as the cushion layers 70 and 72, it is possible to use, for example, a cushion material for hot press. Specifically, the cushion layers 70 and 72 may be constituted of, for example, a paper material, a rubber material, or a composite material thereof. The cushion layers 70 and 72 may be constituted of a single layer or a plurality of layers.

The paper material may be a fiber including one or more selected from glass, rock wool, carbon, ceramic, metal, polybenzazole, polyimide, aromatic polyamide, and polyamide. In addition, the paper material may be a paper base material including, as a main component, Kraft paper, cotton wool paper, mixed paper of wool and Kraft pulp, or the like. These paper materials may be used singly or two or more paper materials may be used in combination. In such a case, it is possible to produce the cushion layers 70 and 72 being excellent the heat resistance and the strength. Particularly, an inorganic fiber including one or more selected from glass, carbon, ceramic, and metal is superior in terms of the dimensional stability with respect to heat or a compressive force. In addition, when a glass fiber is used as the cushion layers 70 and 72, the heat resistance, the strength, and the workability are improved, and the cost can also be reduced.

As the rubber material, it is possible to use, for example, one or more selected from the group consisting of fluorine rubber, EPM, EPDM, hydrogenated nitrile rubber, silicone rubber, acrylic rubber, and butyl rubber. These rubber materials may be used singly or two or more rubber materials may be used in combination. Among these, from the viewpoint of the heat resistance or the strength, fluorine rubber may also be used. The rubber material may be used singly or as a composite material by soaking the paper material.

The thicknesses of the cushion layers 70 and 72 are not particularly limited and may be set to, for example, equal to or more than 0.1 mm and equal to or less than 1.0 mm. In such a case, it is possible to achieve the balance between a cushion property capable of dispersing a stress and the thermal conductivity. In addition, the cushion layers 70 and 72 may be a single layer or a plurality of layers.

In the second embodiment, it is possible to cure the prepregs 20 and 22 in a state in which the surfaces 34 which are the flat surfaces of the flat plate-like metal plates 30 and 32 are caused to press (come into contact with and pressurize) the surfaces of the prepregs 20 and 22. Therefore, it becomes possible to form the surfaces of the resin plates 40 and 42 which are the cured substances of the prepregs 20 and 22 as flat surface having no protrusions and recesses. In addition, the metal plates 30 and 32 are constituted of a metallic material having a high thermal conductivity, and thus it becomes possible to cause a curing reaction to progress uniformly throughout the entire prepregs 20 and 22, and the surface variation of the resin plates 40 and 42 is suppressed.

After that, as shown in Fig. 3C, the metal plates 30 and 32 are separated from the resin plates 40 and 42 made of the cured substances of the prepregs 20 and 22.

With the above-described steps, the sandwich panel 100 of the second embodiment shown in Fig. 4 can be obtained. The method for manufacturing the sandwich panel 100 of the second embodiment is also capable of obtaining the same effect as that of the first embodiment.

In the sandwich panel 100 of the second embodiment, the upper limit value of the surface roughness Rz of the surfaces (the upper surface 44 and the lower surface 46) of the resin plates 40 and 42 is, for example, equal to or less than 30.0 µm, preferably equal to or less than 25.0 µm, and more preferably equal to or less than 20.0 µm. In such a case, it is possible to further improve the flatness of the outer surfaces of the resin plates 40 and 42 which are the outermost layers . On the other hand, the lower limit value of the surface roughness Rz is not particularly limited and can be set to, for example, equal to or more than 0.5 µm.

In addition, the sandwich panel 100 of the second embodiment is also capable of obtaining the same effect as that of the first embodiment.

### (Third embodiment)

A method for manufacturing a sandwich panel of a third embodiment will be described.

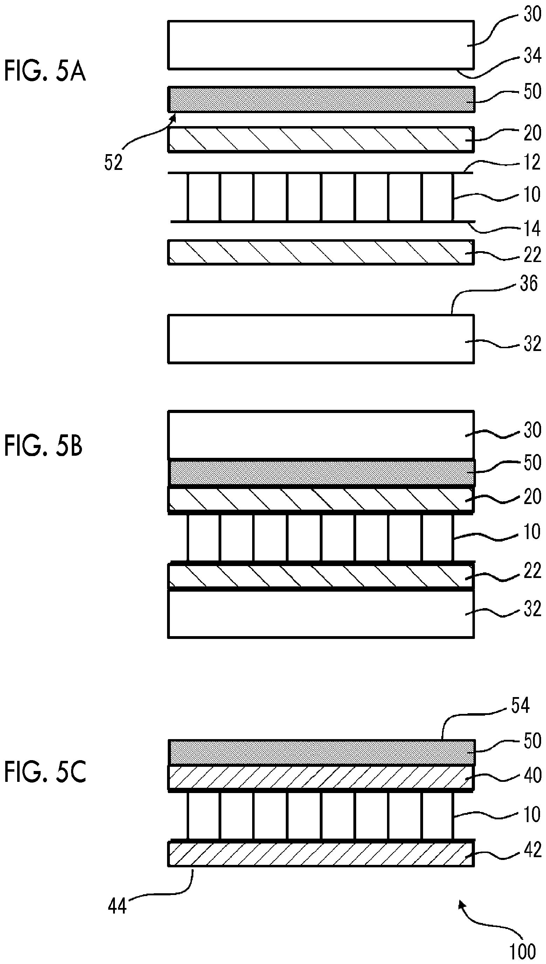

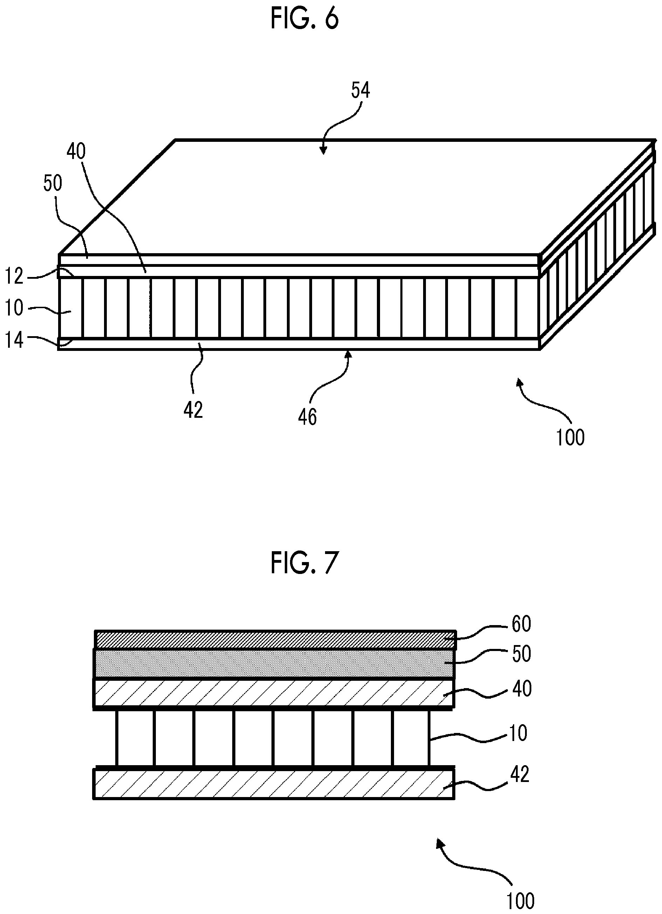

Fig. 5 is a step cross-sectional view showing an example of the method for manufacturing a sandwich panel 100 according to the third embodiment. Fig. 6 is a schematic view of the sandwich panel 100 of the third embodiment which is obtained using the method for manufacturing the sandwich panel 100.

The method for manufacturing the sandwich panel 100 of the third embodiment is capable of including a preparation step of preparing a sheet-like core layer 10 having a honeycomb structure, sheet-like prepregs 20 and 22, and a thermoplastic resin sheet 50, a step of disposing the prepregs 20 and 22 on opening surfaces of the core layer 10 on an upper surface side and a lower surface side respectively and disposing the thermoplastic resin sheet 50 on a surface of at least one of the prepregs 20 and 22 on an upper surface side or a lower surface side, and a step of collectively laminating the core layer 10, the prepregs 20 and 22, and the thermoplastic resin sheet 50 by a heating and pressurization treatment, thereby obtaining a thermoplastic resin sheet 50-attached sandwich panel 100.

According to the third embodiment, it is possible to collectively mold the sandwich panel 100 formed by laminating the core layer 10, resin plates 40 and 42 made of cured substances of the prepregs 20 and 22, and the thermoplastic resin sheet 50. In the method for manufacturing the sandwich panel 100 of the third embodiment, compared with a case in which a sandwich panel is molded, and then a thermoplastic resin sheet is laminate-molded on a surface of such a sandwich panel as a surface material, the number of steps can be decreased, and thus it is possible to improve the productivity of the thermoplastic resin sheet 50-attached sandwich panel 100.

In addition, in the method for manufacturing the sandwich panel 100 of the third embodiment, the step of obtaining the thermoplastic resin sheet 50-attached sandwich panel 100 is capable of including a step of carrying out heating and pressurizing by sandwiching the core layer 10, the prepregs 20 and 22, and the thermoplastic resin sheet 50 using the metal plates 30 and 32 and a step of separating the metal plates 30 and 32.

Specifically, in the step of carrying out heating and pressurizing, it is possible to heat and pressurize the core layer 10, the prepregs 20 and 22, and the thermoplastic resin sheet 50 while bringing the surfaces of the metal plates 30 and 32 as pressing plates into contact with the thermoplastic resin sheet 50 or the prepreg 22. After that, the metal plates 30 and 32 are separated from the thermoplastic resin sheet 50 or the resin plate 42 made of a cured substance of the prepreg 22, whereby the sandwich panel 100 can be obtained.

According to the third embodiment, it is possible to join the prepregs 20 and 22 and the core layer 10 while pressing the flat surfaces of the metal plates 30 and 32 to the surface of the thermoplastic resin sheet 50 or the prepreg 22. Therefore, it is possible to enhance the flatness in a surface (a surface 54) of the thermoplastic resin sheet 50 which comes into contact with the metal plate 30 or a surface (a surface 46) of the resin plate 42 formed by the curing of the prepreg 22 which comes into contact with the metal plate 32. Therefore, it is possible to obtain the sandwich panel 100 having smooth surfaces (the surface 54 of the thermoplastic resin sheet 50 and the surface 46 of the resin plate 42) .

According to the third embodiment, the heating and pressurization treatment is carried out in a state in which the thermoplastic resin sheet 50 is interposed between the sheet-like prepreg 20 and the metal plate 30, and thus, although the detailed mechanism is not clear, it is possible to suppress the generation of voids between the thermoplastic resin sheet 50 and the resin plate 40 which is the cured substance of the prepreg 20, and it is possible to smoothen the surface of the thermoplastic resin sheet 50.

With the above-described steps, it is possible to realize a method for manufacturing the sandwich panel 100 having an excellent manufacturing stability.

The sandwich panel 100 of the third embodiment is excellent in terms of the designability and the heat resistance and thus can be used for aircraft panels.

Next, the respective steps of the method for manufacturing the sandwich panel 100 will be described in detail.

Meanwhile, to the method for manufacturing the sandwich panel 100 of the third embodiment, the manufacturing order, the manufacturing conditions, the materials, or the like of the method for manufacturing the sandwich panel 100 of the first embodiment or the second embodiment can be applied except for the fact that the thermoplastic resin sheet 50 is used.

First, the core layer 10, the prepregs 20 and 22, the thermoplastic resin sheet 50, and the metal plates 30 and 32, which are shown in Fig. 5A, are prepared.

As the thermoplastic resin sheet 50, a resin sheet including a well-known thermoplastic resin can be used, and the sheet is capable of including, for example, a halogen-containing thermoplastic resin. The halogen being contained may be any of fluorine, chlorine, bromine, and iodine, and, from the viewpoint of the chemical resistance and the flame resistance, it is possible to use chlorine or fluorine.

The thermoplastic resin sheet 50 is capable of including a fluorine resin. As the fluorine resin, it is possible to use a fluorine-containing olefin-based elastomer or a fluorine-containing olefin copolymer.

As a specific example, the thermoplastic resin sheet is capable of including, as the fluorine resin, one or more selected from the group consisting of polyvinyl fluoride (PVF), polyvinylidene fluoride (PVDF), polychlorotrifluoroethylene (PCTFE), and polytetrafluoroethylene (PTFE). These fluorine resins may be used singly or two or more fluorine resins may be used in combination. Among these, from the viewpoint of the adhesiveness, polyvinyl fluoride or polyvinylidene fluoride can be used, and, preferably, polyvinylidene fluoride can be used.

Subsequently, the thermoplastic resin sheet 50 is disposed on a surface of at least one of the prepregs 20 and 22 on the upper surface side or the lower surface side as shown in Fig. 5A. Therefore, a laminate including the core layer 10, the prepregs 20 and 22, and the thermoplastic resin sheet 50 is formed.

In addition, as a modification example of the third embodiment, the thermoplastic resin sheets 50 may be disposed on both of the upper surface side of the prepreg 20 and the lower surface side of the prepreg 22 respectively.

Subsequently, as shown in Fig. 5A, the metal plate 32 is disposed on the lower surface of the laminate, and the metal plate 30 is disposed on the upper surface of the laminate.

Subsequently, the core layer 10, the prepregs 20 and 22, and the thermoplastic resin sheet 50 are heated and pressurized while bringing the flat surfaces (the surfaces 34 and 36) of the metal plates 30 and 32 into contact with the surface 54 of the thermoplastic resin sheet 50 or the surface (the lower surface) of the prepreg 22 as shown in Fig. 5B. Therefore, a curing treatment of the prepregs 20 and 22 is carried out, and the resin plates 40 and 42 can be formed. For the heating and pressurization, it is possible to employ conditions of, for example, 100°C to 140°C, 30 minutes to 90 minutes, and 0.35 MPa to 2.0 MPa.

In addition, the preparation step of the third embodiment is capable of including a step of carrying out a surface treatment including one or more selected from the group consisting of a corona treatment, a plasma treatment, a flame treatment, and a primer treatment on the surface (the surface 52) of the thermoplastic resin sheet 50 facing the prepreg 20. The above-described heating and pressurization treatment enables the enhancement of the adhesiveness between the thermoplastic resin sheet 50 and the resin plate 40 which is the cured substance of the prepreg 20.

For example, when the corona treatment is carried out, it is possible to generate a functional group such as carbonyl, hydroxyl, peroxide, aldehyde, ether, or a carboxylic acid on the surface of the thermoplastic resin sheet 50. The above-described functional group enables the improvement of the adhesion strength. In addition, when the surface of the thermoplastic resin sheet 50 is roughened, the anchor effect of the prepreg 20 by the resin is exhibited, and thus it is also possible to improve the adhesiveness between the thermoplastic resin sheet 50 and the resin plate 40.

In addition, the plasma treatment enables the modification of the surface of the thermoplastic resin sheet 50 using a well-known gas such as argon, helium, nitrogen, or oxygen. Therefore, it is possible to generate a functional group such as an amino group, a carboxyl group, a hydroxyl group, or an aldehyde group. Therefore, the surface energy of the thermoplastic resin sheet 50 can be increased, and thus it is possible to improve the adhesiveness by enhancing the wettability to an adhesive.

In addition, the flame treatment enables the generation of a functional group such as a hydroxyl group, a carbonyl group, a carboxyl group, or an amide group on the surface of the thermoplastic resin sheet 50 within a short period of time. Therefore, the surface energy of the thermoplastic resin sheet 50 can be increased, and thus it is possible to improve the adhesiveness by enhancing the wettability to an adhesive.

In addition, in the primer treatment, an active species of a primer remains on the surface of the thermoplastic resin sheet 50, and the adhesiveness to an adhesive or the like can be improved due to a polyfunctional reactive group in the active species.

The step of disposing the thermoplastic resin sheet 50 in the third embodiment is capable of including a step of forming an adhesive between the prepreg 20 and the thermoplastic resin sheet 50. That is, an adhesive may be formed on the surface (the surface 52 facing the prepreg 20) of the thermoplastic resin sheet 50. Therefore, it is possible to increase the adhesion strength between the thermoplastic resin sheet 50 and the resin plate 40 which is the cured substance of the prepreg 20. In addition, the adhesive may have a paste form or have a film shape. In addition, the surface (the surface 52) of the thermoplastic resin sheet 50 on which the adhesive is formed may be a surface-modified surface on which the above-described surface treatment has been carried out.

In the third embodiment, the adhesive is not particularly limited, and it is possible to include one or more selected from the group consisting of a urethane-based adhesive, an epoxy-based adhesive, an acrylic adhesive, a rubber-based adhesive, and a phenol-based adhesive.

At this time, the metal plates 30 and 32 may be pressed through cushion layers not shown. Since it is possible to press the metal plates 30 and 32 through the cushion layers, it is possible to suppress the variation of stresses being applied to the metal plates 30 and 32. Therefore, it is possible to carry out the heating and pressurization treatment in a state in which the surfaces of the metal plates 30 and 32 are in contact with the thermoplastic resin sheet and the prepreg. Therefore, it is possible to improve the surface flatness in the contact surfaces of the metal plates 30 and 32. As an example of the third embodiment, for example, it is possible to provide a favorable flatness to the surface (the surface 54) of the thermoplastic resin sheet 50 or the surface (the surface 46) of the resin plate 42. Therefore, it is possible to realize the sandwich panel 100 having a smooth surface.

In the third embodiment, it is possible to cure the prepregs 20 and 22 in a state in which the surface 34 of the metal plate 30 is caused to press (come into contact with and pressurize) the surface 54 of the thermoplastic resin sheet 50. Therefore, it is possible to suppress the generation of voids between the thermoplastic resin sheet 50 and the resin plate 40 which is the cured substance of the prepreg 20, and it is possible to smoothen the surface of the thermoplastic resin sheet 50.

In the third embodiment, it is possible to cure the prepregs 20 and 22 in a state in which the surface 36 of the metal plate 32 is caused to press (come into contact with and pressurize) the surface of the prepreg 22. Therefore, it becomes possible to form the surface (the surface 46) of the resin plate 42 which is the cured substance of the prepreg 22 as a flat surface having no protrusions and recesses. In addition, the metal plates 30 and 32 are constituted of a metallic material having a high thermal conductivity, and thus it becomes possible to cause a curing reaction to progress uniformly throughout the entire prepregs 20 and 22, and the surface variation of the resin plates 40 and 42 is suppressed.

After that, as shown in Fig. 5C, the metal plates 30 and 32 are separated from the thermoplastic resin sheet 50 or the resin plate 42 made of the cured substance of the prepreg 22.

With the above-described steps, the sandwich panel 100 of the third embodiment shown in Fig. 6 can be obtained.

In addition, the method for manufacturing the sandwich panel 100 of the third embodiment is also capable of obtaining the same effect as that of the first embodiment or the second embodiment.

The sandwich panel 100 of the third embodiment is capable of including the core layer 10 having a honeycomb structure, the resin plates 40 and 42 provided on both surfaces (an upper surface 12 and a lower surface 14) of the core layer 10, and the thermoplastic resin sheet 50 provided on a surface of at least one of the resin plates 40 and 42 on an upper surface side or a lower surface side as shown in Fig. 6. The thermoplastic resin sheets 50 may be provided on both surfaces of the sandwich panel 100 respectively. The number of the resin plates 40 and 42 provided may be plural. In addition, a different functional layer may be disposed between the core layer 10 and the resin plates 40 and 42.

Fig. 7 is an outline view showing a modification example of the sandwich panel 100 according to the third embodiment.

In addition, as a modification example, the sandwich panel 100 according to the third embodiment is capable of including the core layer 10 having a honeycomb structure, the resin plates 40 and 42 provided on both surfaces of the core layer 10, the thermoplastic resin sheet 50 provided on the surface of at least one of the resin plates 40 and 42 on an upper surface side or a lower surface side, and a thermoplastic cosmetic sheet 60 provided on a surface of the thermoplastic resin sheet 50 as shown in Fig. 7. In addition, the thermoplastic resin sheet 50 and the cosmetic sheet 60 may be formed on the surface of the resin plate 42.

As the cosmetic sheet 60 in the third embodiment, it is possible to use, for example, a thermoplastic resin sheet. As the cosmetic sheet 60, a sheet having designability or a sheet having a function such as scratch resistance, an antifouling property, an antibromic property, a mildewproof property, or a sound insulating property may be used.

As the cosmetic sheet 60, it is possible to use, for example, an arbitrary thermoplastic resin film, and it is possible to use, for example, a film of a resin such as a polyvinyl chloride-based resin such as polyvinyl chloride or a vinyl chloride · vinyl acetate copolymer; a polyester-based resin such as an aromatic polyester or an aliphatic polyester; a polyolefin-based resin such as polyethylene, polypropylene, or polymethylpentene; a styrene-based resin such as polystyrene, an acrylonitrile·butadiene·styrene copolymer resin (ABS resin), a styrene·ethylene·butadiene·styrene copolymer, a styrene·ethylene·propylene·styrene copolymer, or a styrene·ethylene·ethylene·propylene·styrene copolymer; an acrylic resin such as polymethyl (meth)acrylate; a polycarbonate-based resin; a cellulose-based resin such as cellophane, triacetyl cellulose, diacetyl cellulose, or acetyl cellulose butyrate; a halogen-containing resin; polyvinyl alcohol, ethylene vinyl alcohol, polyether ether ketone, nylon, polyamide, polyimide, polyurethane, polyether imide, polysulfone, or polyethersulfone; a mixture of one or more of the above-described resins, or a resin composition thereof. This film may be a non-stretched film, a monoaxially stretched film, or a biaxially stretched film. The cosmetic sheet 60 is capable of including a laminate film obtained by laminating two or more layers of one or more of the above-described films.

Among these, the cosmetic sheet 60 can be constituted of the halogen-containing organic resin. The halogen-containing resin may be a halogen, a halogen compound, a halogen derivative, or a combination thereof and is preferably a thermoplastic resin containing fluorine. Specific examples of the halogen-containing resin include polyvinyl fluoride (PVF), polyvinylidene fluoride (PVDF), polyvinyl chloride (PVC), ethylene tetrafluoroethylene (ETFE), fluorinated ethylene propylene (FEP), a perfluoroalkoxy copolymer (PFA), chlorotrifluoroethylene, and polytetrafluoroethylene. These halogen-containing resins may be used singly or two or more halogen-containing resins may be used in combination.

In addition, the cosmetic sheet 60 is capable of including a pigment, an inorganic filler, an organic filler, a resin filler; an additive such as a lubricant, an antioxidant, a weathering stabilizer, a heat stabilizer, a mold release agent, a nucleating agent, an antistatic agent, or a surfactant; a plasticizer; or the like within the scope of the object of the present invention.

In addition, a method for manufacturing the sandwich panel 100 of the third embodiment is capable of including a step of, after the manufacturing of the thermoplastic resin sheet 50-attached sandwich panel 100 shown in Fig. 5C, further laminating the thermoplastic cosmetic sheet 60 on the surface of the thermoplastic resin sheet 50 in the sandwich panel 100. That is, it is possible to add a step of laminate-molding the cosmetic sheet 60 on the surface of the thermoplastic resin sheet 50 after collectively molding the core layer 10, the prepreg 20, and the thermoplastic resin sheet 50.

As described above, after integrally molding the core layer, the prepreg, and the thermoplastic resin sheet, the cosmetic sheet 60 can be further pasted thereto. Therefore, in a case in which the cosmetic sheet 60 breaks, it becomes possible to replace only the cosmetic sheet 60 on the surface of the thermoplastic resin sheet 50. It is possible to repair the sandwich panel 100 at a low cost within a shortened period of time. In addition, it is possible to improve the surface flatness as described above in the surface (the surface 54) of the thermoplastic resin sheet 50 which is a surface to which the cosmetic sheet 60 is pasted. Therefore, it is possible to realize a structure in which the appearance of the cosmetic sheet 60 becomes favorable.

In the sandwich panel 100 of the third embodiment, the upper limit value of the surface roughness Rz of the surface (the surface 54) of the thermoplastic resin sheet 50 or the surface (the surface 46) of the resin plate 42 in a case in which the thermoplastic resin sheet 50 is not formed on the surface is, for example, equal to or less than 30.0 µm, preferably equal to or less than 28.0 µm, and more preferably equal to or less than 25.0 µm. In such a case, it is possible to further improve the flatness of the outer surfaces of the resin plate 42 which is the outermost layer. On the other hand, the lower limit value of the surface roughness Rz is not particularly limited and can be set to, for example, equal to or more than 0.5 µm.

In addition, the resin plates 40 and 42 are capable of containing the fiber base material. Therefore, it is possible to further improve the heat resistance of the sandwich panel 100. In addition, the linear expansion coefficient difference between the resin plates 40 and 42 and the core layer 10 can be decreased, and thus it is possible to suppress the warpage of the sandwich panel 100.

In addition, in the sandwich panel 100 of the third embodiment, the resin constituting the resin plates 40 and 42 may also be formed on the inner wall surface of the honeycomb structure of the core layer 10. The resin constituting the resin plates 40 and 42 is constituted to coat the upper end portion or the lower end portion in the inner wall surface, whereby it is possible to improve the joint strength between the resin plates 40 and 42 and the core layer 10.

The sandwich panel 100 of the third embodiment is excellent in terms of the heat resistance and the designability. In addition, the core layer 10 has a honeycomb structure, and thus it is possible to produce the sandwich panel 100 being lightweight and having a high strength. Therefore, the sandwich panel 100 of the third embodiment can be preferably used for aircraft panels . For example, the sandwich panel 100 can be used for aircraft interiors such as toilets or partitions, cores, or equipment in aircrafts such as wagon chasses.

In addition, the sandwich panel 100 of the third embodiment is also capable of obtaining the same effect as that of the first embodiment or the second embodiment.

### (Fourth embodiment)

The outline of a composite material sheet of a fourth embodiment will be described.

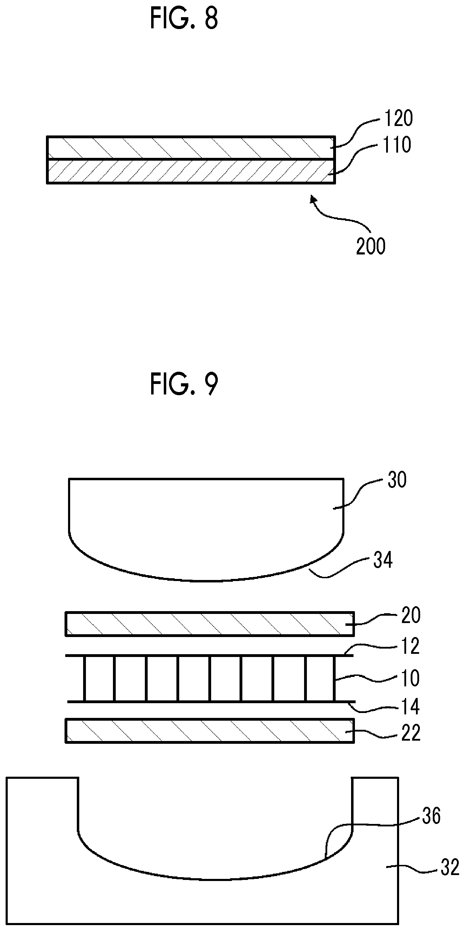

Fig. 8 is a schematic cross-sectional view of a composite material sheet 200 according to the fourth embodiment.

The composite material sheet 200 of the fourth embodiment is capable of including a fabric-like fiber cloth 110, a knit-like fiber knit 120 laminated in a thickness direction of the fiber cloth 110, and a thermosetting resin composition soaking into the fiber cloth 110 and the fiber knit 120.

According to the composite material sheet of the fourth embodiment, the fabric-like fiber cloth 110 and the knit-like fiber knit 120 are jointly used, and thus it is possible to improve the manufacturing stability. In addition, according to the composite material sheet of the fourth embodiment, it is possible to enhance the bending workability of the composite material sheet compared with, for example, a case in which a plurality of fiber cloths is laminated.

The composite material sheet of the fourth embodiment can be used for curved molding and can be used as, for example, a curved plate member constituting a part of a curved panel member. The panel member can be applied to, for example, aircraft panel members.

Hereinafter, individual constitutions of the composite material sheet 200 of the fourth embodiment will be described in detail.

In the fourth embodiment, a fiber base material refers to a material constituted of any of a fabric, a knit, and a non-woven fabric. The fiber cloth 110 is a fabric, and the fiber knit 120 is a knit.

The fabric is constituted of wefts and warps. The fabric has a fiber orientation in which a plurality of wefts and warps intersect each other along substantially linear directions. Therefore, the fiber cloth 110 has a relatively poor stretching property, but has an excellent mechanical strength.

The knit is constituted of ribbing yarns and welting yarns. The knit has a fiber orientation in which a plurality of ribbing yarns and welting yarns confound each other along yarn longitudinal directions. The fabric is capable of having loop structures constituted of stitches of ribbing yarns or welting yarns. Therefore, the fiber knit 120 is more favorable than the fiber cloth 110 in terms of the stretching property or the flexibility.

In addition, the fiber knit 120 may also be constituted of weft knits or warp knits. The warp knits of the fiber knit 120 has loop structures, for example, in the vertical direction, is capable of having a double raschel structure or a tricot structure, and is preferably capable of having a double raschel structure. In such a case, it is possible to provide a relatively high mechanical strength to the fiber knit 120. In addition, the weft knits of the fiber knit 120 is capable of having loop structures, for example, in the horizontal direction. Therefore, the stretching property of the fiber knit 120 can be enhanced.

In the fourth embodiment, the warp knits, the weft knits, the ribbing yarns, or the welting yarns may be constituted of strands that are assemblies of fiber yarns. Meanwhile, the non-woven fabric has a fiber orientation in which a single fiber yarn orients in one direction or a random direction.

In the fourth embodiment, a constituent material of the fiber base material is not particularly limited, and examples thereof include a glass fiber; a carbon fiber; a silicon carbide fiber; a graphite fiber; a polyamide-based resin fiber such as a polyamide resin fiber, an aromatic polyamide resin fiber, or a wholly aromatic polyamide resin fiber; a polyester-based resin fiber such as a polyester resin fiber, an aromatic polyester resin fiber, or a wholly aromatic polyester resin fiber; a polyimide resin fiber; a fluorine resin fiber; a synthetic fiber base material including any of the above-described fibers as a main component; a paper base material including Kraft paper, cotton wool paper, mixed paper of wool and Kraft pulp, or the like as a main component; titanium paper; a carbon fiber cloth; and the like. Among these, from the viewpoint of the heat resistance, a glass fiber can be used.

As the fiber cloth 110, it is possible to use a glass cloth constituted of, among the constituent materials of the fiber base material, for example, the glass fiber. In such a case, the fiber cloth has a poor water-absorbing property, and it is possible to enhance the high strength or the poor thermal expansion property. Meanwhile, as the fiber knit 120, it is possible to use a glass knit constituted of, among the constituent materials of the fiber base material, for example, the glass fiber. In such a case, it is possible to enhance the heat resistance together with the flexibility or the stretching property.

Examples of glass constituting the glass fiber include E glass, C glass, A glass, S glass, D glass, NE glass, T glass, H glass, UT glass, L glass, silica glass, and the like. The glass may be used singly or two or more kinds of glass may be used in combination.

In addition, the thickness of the fiber cloth 110 or the fiber knit 120 may be set to, for example, equal to or more than 5 µm and equal to or less than 1,000 µm, preferably, may be set to equal to or more than 10 µm and equal to or less than 500 µm, and more preferably, may be set to equal to or more than 50 µm and equal to or less than 300 µm. When the thickness of the fiber base material is set to equal to or more than the above-described lower limit value as described above, it is possible to improve the mechanical strength of the composite material sheet 200. In addition, when the thickness of the fiber base material is set to equal to or less than the upper limit value, it is possible to improve the workability of the composite material sheet 200.

In the composite material sheet 200 of the fourth embodiment, it is possible to put the thermosetting resin composition into a B-stage state. In such a case, it is possible to enhance the handleability of the composite material sheet 200. The B-stage state refers to a state in which the rate of reaction of a thermosetting resin in the thermosetting resin composition soaking into the fiber base material, which is computed from the measurement result using a differential scanning calorimeter (DSC), is more than 0% to equal to or less than 60%, preferably equal to or more than 0.5% and equal to or less than 55%, and still more preferably equal to or more than 1% and equal to or less than 50%.

The thermosetting resin composition in the composite material sheet 200 of the fourth embodiment may soak into the fiber cloth 110 and the fiber knit 120, may soak into all of the fiber cloth 110, may soak into a part or all of the fiber knit 120, or may be constituted so as to soak into all of the fiber cloth 110 and the fiber knit 120.

In addition, the composite material sheet 200 of the fourth embodiment may be constituted by laminating the fiber cloth 110 and the fiber knit 120 so as to be in direct contact with each other or the fiber cloth and the fiber knit may be laminated together through the thermosetting resin composition.

Here, the thermosetting resin composition according to the fourth embodiment will be described.

The thermosetting resin composition is capable of including a thermosetting resin.

Examples of the thermosetting resin include an epoxy resin, a cyanate resin, an isocyanate resin, a benzoxazine resin, an unsaturated polyester resin, a phenol resin, a melamine resin, a silicone resin, a bismaleimide resin, an acrylic resin, and the like. These thermosetting resins may be used singly or two or more thermosetting resins maybe used in combination. Among these, the thermosetting resin may include one or more selected from the group consisting of a phenol resin, an epoxy resin, and an unsaturated polyester resin and preferably includes a phenol resin.

In addition, into the thermosetting resin composition, it is possible to appropriately blend a thermoplastic resin, a filler such as an organic filler or an inorganic filler, a curing agent, a curing accelerator, other additives, and the like as necessary.

Specific examples of the thermoplastic resin include polyamide, polycarbonate, polyacetal, polyphenylene oxide, polyphenylene sulfide, polyarylate, polyester, polyimide, polyamideimide, polyetherimide, polysulfone, polyethersulfone, polyetherketone, and the like. These thermoplastic resins may be used singly or two or more thermoplastic resins may be used in combination. The thermoplastic resin may have an organic fine particle form.

As the organic filler, the thermosetting resin composition is capable of including rubber particles. Specific examples of the rubber particles include core-shell-type rubber particles, crosslinked acrylonitrile butadiene rubber particles, crosslinked styrene butadiene rubber particles, acrylic rubber particles, silicone particles, and the like. These organic fillers may be used singly or two or more organic fillers may be used in combination.

Specific examples of the inorganic filler include silicates such as talc, baked clay, unbaked clay, mica, and glass, oxides such as titanium oxide, alumina, boehmite, carbon black, silica, and molten silica, carbonates such as calcium carbonate, magnesium carbonate, and hydrotalcite, hydroxides such as aluminum hydroxide, magnesium hydroxide, and calcium hydroxide, sulfates or sulfites such as barium sulfate, calcium sulfate, and calcium sulfite, borates such as zinc borate, barium metaborate, aluminum borate, calcium borate, and sodium borate, nitrides such as aluminum nitride, boron nitride, silicon nitride, and carbon nitride, titanates such as strontium titanate and barium titanate, and the like. These inorganic fillers may be used singly or two or more inorganic fillers may be used in combination.

In addition, the curing agent is not particularly limited as long as the curing agent is capable of reacting with an epoxy resin, and examples thereof include an imidazole compound, an aliphatic polyamine, an aromatic polyamine, an acid anhydride, a phenol resin-based curing agent, and the like. In addition, a latent curing agent can also be used. As the curing accelerator, it is possible to use a phosphorus atom-containing compound, a nitrogen atom-containing compound, or the like. In addition, as an example of the additives, the thermosetting resin composition is capable of including a rubber material such as a random copolymer of butadiene and acrylonitrile.

The composite material sheet 200 of the fourth embodiment may have a roll shape that can be coiled or a leaflet shape having a rectangular shape.

Next, a method for manufacturing the composite material sheet 200 will be described.

The method for manufacturing the composite material sheet 200 of the fourth embodiment is capable of including a soaking step of soaking the thermosetting resin composition into the fiber cloth 110 and the fiber knit 120 and a drying step of heating and drying the thermosetting resin composition to be in a semi-cured state (B-stage state).

In the fourth embodiment, examples of a well-known soaking method include a method in which the thermosetting resin composition is dissolved in a solvent to prepare a resin varnish and the fiber base material is immersed in the resin varnish, a method in which the resin varnish is applied to the fiber base material using a variety of coaters, a method in which the resin varnish is blown to the fiber base material using a spray, a method in which a resin film made of the thermosetting resin composition (a resin film formed by drying the thermosetting resin composition) is laminated on a single side or both surfaces of the fiber base material, and the like.

In the soaking step, it is possible to use a soaking method in which the thermosetting resin composition is caused to soak into the fiber cloth 110 and the fiber knit 120 at the same time by using the fiber cloth 110 as a carrier for transporting the fiber knit 120. Therefore, the productivity can be enhanced.

The soaking method is capable of including, for example, a step of preparing a laminate by laminating the fiber knit 120 in a state of being not imparted with tension on the surface of the fiber cloth 110 in a state of being imparted with certain tension (tensile force) in the in-plane direction of the fiber cloth 110 so as to come into contact with each other and a step of soaking the thermosetting resin composition into the laminate using the above-described well-known soaking method. In this case, the soaking direction in which the thermosetting resin composition is caused to soak can be set to the lamination direction from the fiber knit 120 to the fiber cloth 110 of the laminate. For example, the thermosetting resin composition may be caused to soak by applying or blowing the thermosetting resin composition to the surface of the fiber knit 120 which is laminated on the fiber cloth 110 in a state of being imparted with tension and is not imparted with tension, applying stress in the thermosetting resin composition, laminating a resin film, or the like.

Next, the outline of a method for manufacturing the sandwich panel 100 using the composite material sheet 200 of the fourth embodiment will be described.

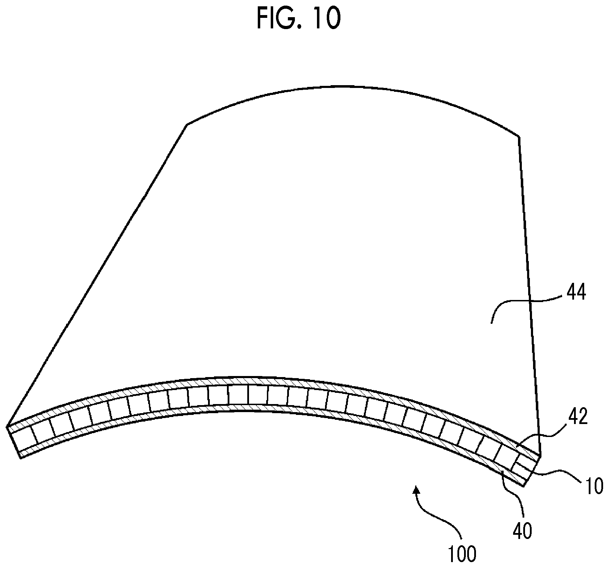

Fig. 9 is a step cross-sectional view showing a manufacturing step of the sandwich panel 100. Fig. 10 is a schematic view showing the outline of the sandwich panel 100.

The method for manufacturing the sandwich panel 100 of the fourth embodiment is capable of including a step of disposing the composite material sheet 200 on an opening surface on at least one of an upper surface side and a lower surface side of a sheet-like core layer 10 having a honeycomb structure and a step of heating and pressurizing the core layer 10 and the composite material sheet 200, thereby obtaining the sandwich panel 200.

In addition, in the method for manufacturing the sandwich panel 100 of the fourth embodiment, the step of obtaining the sandwich panel 100 is capable of including a step of heating and pressurizing the core layer 10 and the composite material sheet 200 while pressing the core layer and the composite material sheet with a pressing member (a die 30) having a curved surface (a surface 34). In such a case, it is possible to obtain the sandwich panel 100 having a curved shape as shown in Fig. 10.

Next, the respective steps of the method for manufacturing the sandwich panel 100 will be described in detail.

Meanwhile, to the method for manufacturing the sandwich panel 100 of the third embodiment, the manufacturing order, the manufacturing conditions, the materials, or the like of the method for manufacturing the sandwich panel 100 of the first embodiment to the third embodiment can be applied except for the fact that the composite material sheet 200 is used or the fact that curved molding is used.

First, the core layer 10, the prepregs 20 and 22, and dies 30 and 32, which are shown in Fig. 9, are prepared. As the dies 30 and 32, it is possible to use an upper die (the die 30) and a lower die (the die 32) of a die having curved surfaces (the surfaces 34 and 36).

As the prepregs 20 and 22, it is possible to use the composite material sheet 200 of the fourth embodiment. The composite material sheet 200 is preferably disposed on the core layer 10 so that the fiber knit 120 is located closer to the curved surface (the surface 36) of the die 32 than the fiber cloth 110. The composite material sheet 200 needs to be disposed on at least one surface (the lower surface 14) of the core layer 10 and may be disposed on any of both surfaces (the upper surface 12 and the lower surface 14) of the core layer 10.

Meanwhile, it is possible to use the composite material sheet 200 in a B-stage state as the prepreg 22 and use the above-described different sheet member in a B-stage state which is formed by soaking the thermosetting resin composition into the fiber base material as the prepreg 20.

As described above, it is possible to heat and pressurize the core layer 10 and the composite material sheet 200 while pressing the core layer and the composite material sheet with the curved surface (the surface 34) of the pressing member (the die 30) in a state in which the core layer 10 and the prepregs 20 and 22 laminated on both surfaces of the core layer are disposed in a molding space having a curved shape, which is compartmented by the die 30 and the die 32, that is, a molding space compartmented by a protrusion portion and a recess portion.

With the above-described heating and pressurization, a curing treatment of the prepregs 20 and 22 is carried out, and the resin plates 40 and 42 can be formed. For the heating and pressurization, it is possible to employ conditions of, for example, 110°C to 180°C, five minutes to 90 minutes, and 0.35 MPa to 3.0 MPa.

After that, the dies 30 and 32 are separated from the resin plates 40 and 42 made of the cured substances of the prepregs 20 and 22.

With the above-described steps, the sandwich panel 100 having a curved shape as a whole as shown in Fig. 9 can be obtained. That is, it is possible to obtain a panel member having a curved shape (the sandwich panel 100) including the cured substance of the composite material sheet 200 of the fourth embodiment.

In addition, the method for manufacturing the sandwich panel 100 of the fourth embodiment is also capable of obtaining the same effect as that of the first embodiment to the third embodiment.

The sandwich panel 100 obtained using the above-described manufacturing method includes the core layer 10 and the resin plates 40 and 42 laminated on both sides of the core layer 10 as shown in Fig. 9 and is capable of having a curved structure as a whole. The resin plate 42 is a protrusion side of the curved surface (the surface 44), and the resin plate 42 is a recess portion side of the curved surface. The cured substance of the composite material sheet 200 of the fourth embodiment is capable of constituting, between the resin plates 40 and 42, at least the resin plate 42. In this case, the fiber knit 120 in the resin plate 42 is disposed closer to the surface 44 than the fiber cloth 110.

The sandwich panel 100 of the fourth embodiment is excellent in terms of the heat resistance and the designability. In addition, the core layer 10 has a honeycomb structure, and thus it is possible to produce the sandwich panel 100 being lightweight and having a high strength. Therefore, the sandwich panel 100 of the fourth embodiment can be preferably used for aircraft panels . For example, the sandwich panel 100 can be used for aircraft interiors such as toilets or partitions, cores, or equipment in aircrafts such as wagon chasses.

In addition, the sandwich panel 100 of the fourth embodiment is excellent in terms of the workability such as bending due to the use of the composite material sheet 200, and thus it becomes possible to form a curved shape as the entire shape. In addition, in the case of being used in a panel member having a curved shape, the composite material sheet 200 may be constituted so that the fiber knit 120 in the panel member is disposed on the outer side of 130 since the fiber knit has a stretching property or flexibility. In such a case, it is possible to realize a panel member having a desired curved structure which follows the shape of an installment space such as an aircraft.

According to what has been described above, the composite material sheet 200 of the fourth embodiment can be used for a panel member having a curved shape (the sandwich panel 100). The composite material sheet 200 of the fourth embodiment can be preferably used for, for example, aircraft panel members.

Hitherto, the embodiments of the present invention have been described with reference to the drawings, but the embodiments are examples of the present invention, and it is also possible to employ a variety of constitutions other than what has been described above.

### [Examples]

Hereinafter, the present invention will be described in detail with reference to examples, but the present invention is not limited to these examples.

### <Sandwich panels 1 to 6>

### [Comparative Example 1]

### (Manufacturing of prepreg)

A sheet-like prepreg was obtained by blending a phenol resin and soaking the phenol resin into a glass fiber (#7781, manufactured by Hexcel Corporation) . The prepreg was in a B-stage state.

### (Manufacturing of sandwich panel)

The obtained prepregs were disposed on both surfaces of a honeycomb core (an aramid fiber, thickness: 10 mm, HRH-10-1/8-3.0 (manufactured by Hexcel Corporation), area: 1 m×3 m), thereby obtaining a laminate. Subsequently, the obtained laminate was heated and pressurized using a mechanical press by pressing the both surfaces of the laminate with SUS plates (thickness: 1.5 mm, Rz: 1.0 µm) at 0.7 MPa and 127°C for 60 minutes, thereby curing the prepregs and forming resin plates. After that, the SUS plates were separated from the resin plates, thereby obtaining a sandwich panel 1 made up of the resin plates, the honeycomb core, and the resin plates.

Meanwhile, in Comparative Example 1, a mold release film was not disposed between the SUS plate and the prepreg. Meanwhile, the glass transition temperature (Tg) of a cured substance of the prepreg was 130°C.

### [Comparative Example 2]

In Comparative Example 2, a sandwich panel 2 was obtained in the same manner as in Comparative Example 1 except for the fact that the laminate was heated and pressurized in a state in which a mold release film (TREFIN (manufactured by PANAC Corporation)) was disposed between the SUS plate and the prepreg.

### [Comparative Example 3]

In Comparative Example 3, a sandwich panel 3 was obtained in the same manner as in Comparative Example 1 except for the fact that a tinned plate (thickness: 1.0 mm, Rz: 2.0 µm) was used instead of the SUS plate.

### [Comparative Example 4]

In Comparative Example 4, a sandwich panel 4 was obtained in the same manner as in Comparative Example 1 except for the fact that an aluminum plate (thickness: 2.0 mm, Rz: 2.5 µm) was used instead of the SUS plate.

### [Comparative Example 1']

In Comparative Example 1', a sandwich panel 5 was obtained in the same manner as in Comparative Example 1 except for the fact that a paper phenol plate (thickness: 5.0 mm, Rz: 9.0 µm) was used instead of the SUS plate.

### [Comparative Example 2']

The obtained prepregs were disposed on both surfaces of a honeycomb core (an aramid fiber, thickness: 10 mm, HRH-10-1/8-3. 0 (manufactured by Hexcel Corporation), area: 1 m×3 m) through mold release films (TREFIN (manufactured by PANAC Corporation)), thereby obtaining a laminate. The obtained laminate was put into a vacuum bag and heated and cured in an autoclave under conditions of 20 N, 127°C, and 60 minutes, thereby obtaining a sandwich panel 6.

**[Table 1]**

| | Unit | Comparative Example 1 | Comparative Example 2 | Comparative Example 3 | Comparative Example 4 | Comparative Example 1' | Comparative Example 2' |
|---|---|---|---|---|---|---|---|
| Sandwich panel | | 1 | 2 | 3 | 4 | 5 | 6 |
| Surface flatness | | A | B | B | B | C | D |
| Manufacturing stability | | B | B | B | B | D | D |
| Surface roughness Rz | µm | 15 | 18 | 20 | 22 | 70 | 900 |

### (Evaluation items)

On the sandwich panels 1 to 6, the following evaluations were carried out. The evaluation results are shown in Table 1.

### (Surface flatness)

The surface of the obtained sandwich panel which was on the surface side was visually observed, and the presence or absence of dents or gloss was evaluated using the following standards.
A: The surface had no dents, had luster, and had an extremely excellent appearance.
B: The surface rarely had dents and relatively did not have luster, but had no practical problem.
C: The surface had swells or dents, had no luster, and could not be used for usages in which the appearance quality mattered.
D: Swells or dents were evident, and the sandwich panel was a defective product.

### (Manufacturing stability)

The surface of the obtained sandwich panel which was on the surface side was visually observed, and the presence or absence of protrusions and recesses, holes, or partial losses was evaluated.
A: The surface did not have any of protrusions and recesses, holes, or partial losses.
B: The surface had any of protrusions and recesses, holes, or partial losses.

### (Surface roughness Rz)

Rz was measured according to JIS B0601.

In Comparative Examples 1 to 4, the sandwich panels having a smooth surface were obtained. The sandwich panels of Comparative Examples 1 to 4 had an excellent appearance and were excellent in terms of the manufacturing stability. In Comparative Examples 1' to 3', sandwich panels having a smooth surface could not be obtained.

### <Sandwich panels 7 to 13>

### [Comparative Example 5]

### (Manufacturing of prepreg)

A sheet-like prepreg was obtained by blending a phenol resin and soaking the phenol resin into a glass fiber (#7781, manufactured by Hexcel Corporation) . The prepreg was in a B-stage state.

### (Manufacturing of sandwich panel)

The obtained prepregs were disposed on both surfaces of a honeycomb core (an aramid fiber, thickness: 10 mm, HRH-10-1/8-3.0 (manufactured by Hexcel Corporation), area: 1 m×3 m), thereby obtaining a laminate. Subsequently, SUS plates (thickness: 1.5 mm, Rz: 1.0 µm) were pressed on both surfaces of the obtained laminate and heated and pressurized using a mechanical press with cushion layers (a paper laminate obtained by superimposing 10 sheets of Kraft paper having a basis weight of 200 g/m²) provided between the upper side SUS plate and a pressing plate of the mechanical press and between the lower side SUS plate and a pressing plate of the mechanical press respectively at 0.7 MPa and 127°C for 60 minutes, thereby curing the prepregs and forming resin plates. After that, the SUS plates were separated from the resin plates, thereby obtaining a sandwich panel 7 made up of the resin plates, the honeycomb core, and the resin plates.

Meanwhile, in Comparative Example 1, a mold release film (mold release layer) was not disposed between the SUS plate and the prepreg. Meanwhile, the glass transition temperature (Tg) of a cured substance of the prepreg was 130°C.

### [Comparative Example 6]

In Comparative Example 6, a sandwich panel 8 was obtained in the same manner as in Comparative Example 5 except for the fact that the laminate was heated and pressurized in a state in which a mold release film (TREFIN (manufactured by PANAC Corporation)) was disposed between the SUS plate and the prepreg.

### [Comparative Example 7]

In Comparative Example 7, a sandwich panel 9 was obtained in the same manner as in Comparative Example 5 except for the fact that a tinned plate (thickness: 1. 0 mm, Rz: 2 . 0 µm) was used instead of the SUS plate.

### [Comparative Example 8]

In Comparative Example 8, a sandwich panel 10 was obtained in the same manner as in Comparative Example 5 except for the fact that an aluminum plate (thickness: 2.0 mm, Rz: 2.5 µm) was used instead of the SUS plate.

### [Comparative Example 3']

In Comparative Example 3' , a sandwich panel 11 was obtained in the same manner as in Comparative Example 5 except for the fact that a paper phenol plate (thickness: 5. 0 mm, Rz: 9.0 µm) was used instead of the SUS plate, and cushion layers were not disposed on both of the SUS plate on the upper side and the SUS plate on the lower side.

### [Comparative Example 4']

The prepregs obtained in Comparative Example 5 were disposed on both surfaces of a honeycomb core (an aramid fiber, thickness: 10 mm, HRH-10-1/8-3.0 (manufactured by Hexcel Corporation), area: 1 m×3 m) through mold release films (TREFIN (manufactured by PANAC Corporation)), thereby obtaining a laminate. The obtained laminate was put into a vacuum bag and heated and cured in an autoclave under conditions of 20 N, 127°C, and 60 minutes, thereby obtaining a sandwich panel 12.

### [Reference Example 1]

In Reference Example 1, a sandwich panel 13 was obtained in the same manner as in Comparative Example 5 except for the fact that cushion layers were not disposed on both of the SUS plate on the upper side and the SUS plate on the lower side.

**[Table 2]**

| | Unit | Comparative Example 5 | Comparative Example 6 | Comparative Example 7 | Comparative Example 8 | Comparative Example 3' | Comparative Example 4' | Reference Example 1 |
|---|---|---|---|---|---|---|---|---|
| Sandwich panel | | 7 | 8 | 9 | 10 | 11 | 12 | 13 |
| Surface flatness | | A | B | B | B | C | D | A |
| Manufacturing stability | | B | B | B | B | D | D | B |
| Moldability | | A | A | A | A | D | D | B |
| Surface roughness Rz | µm | 13 | 16 | 18 | 20 | 70 | 900 | 15 |

### (Evaluation items)

On the sandwich panels 7 to 13, the following evaluations were carried out. The evaluation results are shown in Table 2.

### (Surface flatness)

The surface of the obtained sandwich panel which was on the surface side was visually observed, and the presence or absence of dents or gloss was evaluated using the following standards.
A: The surface had no dents, had luster, and had an extremely excellent appearance.
B: The surface rarely had dents and relatively did not have luster, but had no practical problem.
C: The surface had swells or dents, had no luster, and could not be used for usages in which the appearance quality mattered.
D: Swells or dents were evident, and the sandwich panel was a defective product.

### (Manufacturing stability)

The surface of the obtained sandwich panel which was on the surface side was visually observed, and the presence or absence of protrusions and recesses, holes, or partial losses was evaluated.

A: The surface did not have any of protrusions and recesses, holes, or partial losses.

B: The surface had any of protrusions and recesses, holes, or partial losses.

### (Moldability)

For the obtained sandwich panels, molding defect was evaluated.
A: There were no portions to which the resin was not adhered by pressure, and the moldability was favorable.
B: There were almost no portions to which the resin was not adhered by pressure, and there was no practical problem.
C: There were a number of portions to which the resin was not adhered by pressure.

### (Surface roughness Rz of resin plate)

Rz was measured according to JIS B0601.

In Comparative Examples 5 to 8, the sandwich panels having a smooth surface were obtained. The sandwich panels of Comparative Examples 5 to 8 had an excellent appearance and were excellent in terms of the manufacturing stability and the moldability. In Comparative Example 4', a sandwich panel having a smooth surface could not be obtained.

### <Sandwich panels 14 to 18>

### [Reference Example 2]

### (Manufacturing of prepreg)

A sheet-like prepreg was obtained by blending a phenol resin and soaking the phenol resin into a glass fiber (#7781, manufactured by Hexcel Corporation) . The prepreg was in a B-stage state.

### (Manufacturing of sandwich panel)

The obtained prepregs were disposed on both surfaces of a honeycomb core (an aramid fiber, thickness: 10 mm, HRH-10-1/8-3. 0 (manufactured by Hexcel Corporation), area: 1 m×3 m), and a thermoplastic resin sheet (polyvinylidene fluoride (PVDF)) was laminated on the upper surface side of the prepreg, thereby obtaining a laminate. Subsequently, the obtained laminate was heated and pressurized using a mechanical press by pressing the both surfaces of the laminate with SUS plates (thickness: 1.5 mm, Rz: 1.0 µm) at 0.7 MPa and 127°C for 60 minutes, thereby curing the prepregs and forming resin plates. After that, the SUS plates were separated from the resin plates and the thermoplastic resin sheet, thereby obtaining a sandwich panel 14 made up of the resin plates, the honeycomb core, the resin plates, and the thermoplastic resin sheet.

Meanwhile, in Reference Example 2, a mold release film was not disposed between the SUS plate and the prepreg. Meanwhile, the glass transition temperature (Tg) of a cured substance of the prepreg was 130°C.

### [Example 9]

In Example 9, a sandwich panel 15 was obtained in the same manner as in Reference Example 2 except for the fact that a corona treatment (the surface wettability after the corona treatment was 60 dynes) was carried out on the surface of the thermoplastic resin sheet (PVDF) facing the prepreg.

### [Example 10]

In Example 10, a sandwich panel 16 was obtained in the same manner as in Example 9 except for the fact that a corona treatment (the surface wettability after the corona treatment was 60 dynes) was carried out on the surface of the thermoplastic resin sheet (PVDF) facing the prepreg, and an adhesive (an acrylic adhesive, manufactured by DuPont, 68080) was applied onto the corona-treated surface.

### [Example 11]

In Example 11, a sandwich panel 17 was obtained in the same manner as in Example 9 except for the fact that polyvinyl fluoride (PVF) was used instead of PVDF as the thermoplastic resin sheet.

### [Comparative Example 5']

The prepregs obtained in Reference Example 2 were disposed on both surfaces of a honeycomb core (an aramid fiber, thickness: 10 mm, HRH-10-1/8-3. 0 (manufactured by Hexcel Corporation), area: 1 m×3 m) through mold release films (TREFIN (manufactured by PANAC Corporation)), thereby obtaining a laminate. The obtained laminate was put into a vacuum bag and heated and cured in an autoclave under conditions of 20 N, 127°C, and 60 minutes, thereby obtaining a sandwich panel 18. A thermoplastic resin sheet (polyvinylidene fluoride (PVDF)) was laminate-molded on the obtained sandwich panel 18.

**[Table 3]**

| | Unit | Reference Example 2 | Example 9 | Example 10 | Example 11 | Comparative Example 5' |
|---|---|---|---|---|---|---|
| Sandwich panel | | 14 | 15 | 16 | 17 | 18 |
| Productivity | | A | A | A | A | D |
| Surface flatness | | A | B | B | B | D |
| Manufacturing stability | | B | B | B | B | D |
| Surface roughness Rz | µm | 15 | 25 | 20 | 25 | 900 |
| Peeling strength | N/mm | 0.36 | 0.68 | 1.15 | 0.65 | 0.30 |

### (Evaluation items)

On the sandwich panels 14 to 18, the following evaluations were carried out. The evaluation results are shown in Table. 3.

### (Surface flatness)

The surface of the obtained sandwich panel which was on the surface side was visually observed, and the presence or absence of dents or gloss was evaluated using the following standards.
A: The surface had no dents, had luster, and had an extremely excellent appearance.
B: The surface rarely had dents and relatively did not have luster, but had no practical problem.
C: The surface had swells or dents, had no luster, and could not be used for usages in which the appearance quality mattered.
D: Swells or dents were evident, and the sandwich panel was a defective product.

### (Manufacturing stability)

The surface of the obtained sandwich panel which was on the surface side was visually observed, and the presence or absence of protrusions and recesses, holes, or partial losses was evaluated.
A: The surface did not have any of protrusions and recesses, holes, or partial losses.
B: The surface had any of protrusions and recesses, holes, or partial losses.

### (Surface roughness Rz)

The surface roughness Rz of the thermoplastic resin sheets in the obtained sandwich panels 1 to 5 was measured according to JIS B0601.

### (Peeling strength)

The peeling strength of the thermoplastic resin sheet when drawn in a 90-degree direction under conditions of room temperature (25°C) and a tensile rate of 300 mm/minute was measured using a tensile tester according to JIS Z0237. The unit is N/mm.

In Examples 9 to 11 and Reference Example 2, it was found that the sandwich panel formed by laminating the thermoplastic resin sheet could be obtained by collective molding and thus the productivity was more favorable than that of Comparative Example 5'. In Examples 9 to 11, the sandwich panels having a smooth surface were obtained. The sandwich panels of Examples 9 to 11 had an excellent appearance and were excellent in terms of the manufacturing stability. In addition, it was found that, in the sandwich panels of Examples 9 to 11, the peeling strengths of the thermoplastic resin sheets could be increased compared with Reference Example 2 or Comparative Example 5' , and it was possible to realize adhesiveness having no practical problem. In Comparative Example 5', the productivity and the manufacturing stability were poor, and a sandwich panel having a smooth surface could not be obtained.

### <Sandwich panels 19 and 20>

### [Comparative Example 12]

### (Manufacturing of prepreg)

A laminate was prepared by laminating a fiber knit (a glass knit, warp knits: a double raschel structure, manufactured by Sakai Sangyo Co., Ltd.) in a state of being not imparted with tension on the surface of a fiber cloth (a glass cloth, #120, manufactured by Hexcel Corporation) in a state of being imparted with certain tension (tensile force) in the in-plane direction of the fiber cloth so as to come into contact with each other, and a phenol resin was caused to soak into the laminate, thereby obtaining a sheet-like prepreg 1 (composite material sheet) . The prepreg 1 was in a B-stage state.

In addition, a sheet-like prepreg 2 was obtained by blending a phenol resin and soaking the phenol resin into a fiber cloth (a glass cloth, #120, manufactured by Hexcel Corporation). The prepreg 2 was in a B-stage state.

### (Manufacturing of sandwich panel)

The obtained prepreg 1 (the fiber knit was located on the outer side of the fiber cloth), a honeycomb core (an aramid fiber, thickness: 10 mm, HRH-10-1/8-3.0 (manufactured by Hexcel Corporation), area: 1 m×3 m), and the obtained prepreg 2 was laminated in this order, thereby obtaining a laminate. Subsequently, as shown in Fig. 2, the prepreg 1 was disposed in the recess portion (the surface 36) of the die 32 so as to face the fiber knit in the prepreg 1, the prepreg 2 side of the laminate was pressed with the protrusion surface (the surface 34) of the pressing member of the die 30, and the laminate was heated and pressurized at 0.7 MPa and 143°C for 16 minutes, thereby curing the prepregs 1 and 2 and forming resin plates. After that, the dies 30 and 32 were separated from the resin plates, thereby obtaining a sandwich panel 19 having a curved shape made up of the resin plates, the honeycomb core, and the resin plates. Meanwhile, the glass transition temperature (Tg) of cured substances of the prepregs 1 and 2 was 130°C.

### [Comparative Example 6']

### (Manufacturing of prepreg)

A phenol resin was caused to soak into a fiber knit (a glass knit, warp knits: a double raschel structure, manufactured by Sakai Sangyo Co., Ltd.), thereby obtaining a sheet-like prepreg 3.

In Comparative Example 6', it was clarified that, in the case of soaking the phenol resin into the glass knit alone, the base material elongated (the width became narrow), the obtained prepreg 3 had different dimensions from the regulated dimensions, and a dimensional variation was caused. Therefore, the prepreg 3 of Comparative Example 6' could not be applied to the manufacturing of a sandwich panel.

In Comparative Example 12, the prepreg 1 (the composite material sheet) was easily obtained by using the glass cloth as a carrier of the glass knit. In addition, it was clarified that, in the obtained prepreg 1, dimensional variation was suppressed, the dimensions coincided with the regulated dimensions, and thus the manufacturing stability was excellent. It was found that, when the above-described prepreg 1 was disposed on the curved outside of the curved sandwich panel 19, a favorable bending workability could be obtained. In addition, it was found that, in the obtained sandwich panel 19 having a curved shape, the generation of wrinkles on the fiber knit-side surface was suppressed, and the appearance was favorable, and thus the manufacturing stability was excellent.

Hitherto, the present invention has been more specifically described on the basis of the examples, but these are examples of the present invention, and it is possible to employ a variety of constitutions other than what has been described above.

## Claims

1. A method for manufacturing a sandwich panel comprising:
a preparation step of preparing a sheet-like core layer having a honeycomb structure, sheet-like prepregs, and a thermoplastic resin sheet;
a step of disposing the prepregs on opening surfaces of the core layer on an upper surface side and a lower surface side respectively, and disposing the thermoplastic resin sheet on a surface of at least one of an upper surface side and a lower surface side of the prepregs;
a step of obtaining a thermoplastic resin sheet-attached sandwich panel by collectively laminating the core layer, the prepregs, and the thermoplastic resin sheet by a heating and pressurization treatment in which while pressing a flat surface of a metal plate as a pressing plate to the thermoplastic resin sheet, the metal plate is heated and pressed by a press plate of a mechanical press; and
a step of separating the metal plates,
wherein the preparation step includes a step of carrying out a surface treatment including one or more selected from the group consisting of a corona treatment, a plasma treatment, a flame treatment, and a primer treatment on a surface of the thermoplastic resin sheet facing the prepreg.

2. The method for manufacturing a sandwich panel according to Claim 1,
wherein the step of disposing the thermoplastic resin sheet includes a step of forming an adhesive between the prepreg and the thermoplastic resin sheet, and
the adhesive includes one or more selected from the group consisting of a urethane-based adhesive, an epoxy-based adhesive, an acrylic adhesive, a rubber-based adhesive, and a phenol-based adhesive.

3. The method for manufacturing a sandwich panel according to Claim 1 or 2,
wherein the thermoplastic resin sheet includes a halogen-containing thermoplastic resin.

4. The method for manufacturing a sandwich panel according to Claim 3,
wherein the halogen-containing thermoplastic resin includes one or more selected from the group consisting of polyvinyl fluoride (PVF), polyvinylidene fluoride (PVDF), polychlorotrifluoroethylene (PCTFE), and polytetrafluoroethylene (PTFE).

5. The method for manufacturing a sandwich panel according to any one of Claims 1 to 4,
wherein the step of obtaining the thermoplastic resin sheet-attached sandwich panel includes a step of carrying out heating and pressurizing by sandwiching the core layer, the prepregs, and the thermoplastic resin sheet using metal plates.

6. The method for manufacturing a sandwich panel according to any one of Claims 1 to 5,
wherein the metal plate is an SUS plate.

7. The method for manufacturing a sandwich panel according to any one of Claims 1 to 6,
wherein a pressurization force in the pressurization treatment is equal to or more than 0.35 MPa and equal to or less than 2.0 MPa.

8. The method for manufacturing a sandwich panel according to any one of Claims 1 to 7,
wherein a heating temperature in the pressurization treatment is equal to or higher than 110°C and equal to or lower than 140°C.

9. The method for manufacturing a sandwich panel according to any one of Claims 1 to 8,
wherein, during the heating and pressurization of the prepregs, a resin constituting the prepregs is moved onto an inner wall surface of the honeycomb structure of the core layer.

10. The method for manufacturing a sandwich panel according to any one of Claims 1 to 9,
wherein the prepreg is a sheet member in a B-stage state which is formed by soaking a thermosetting resin composition into a fiber base material.

11. The method for manufacturing a sandwich panel according to Claim 10,
wherein the thermosetting resin composition includes a phenol resin.

12. The method for manufacturing a sandwich panel according to any one of Claims 1 to 11,
wherein an adhesive layer is not disposed between the core layer and the prepreg.

13. The method for manufacturing a sandwich panel according to any one of Claims 1 to 12,
wherein a mold release layer is not disposed between the prepreg and the metal plate.

14. The method for manufacturing a sandwich panel according to any one of Claims 1 to 13,
wherein a constituent material of the core layer includes an aramid fiber.

15. The method for manufacturing a sandwich panel according to any one of Claims 1 to 14, further comprising:
a step of cutting the obtained sandwich panel.

16. The method for manufacturing a sandwich panel according to any one of Claims 1 to 15,
wherein the sandwich panel is used for an aircraft panel.

## Patentansprüche

1. Verfahren zum Anfertigen einer Sandwichplatte, umfassend:
einen Herstellungsschritt zum Herstellen einer blattartigen Kernschicht, die eine Wabenstruktur, blattartige Prepregs und ein thermoplastisches Harzblatt aufweist;
einen Schritt des Anordnens der Prepregs auf Öffnungsoberflächen der Kernschicht auf einer oberen Oberflächenseite beziehungsweise einer unteren Oberflächenseite und Anordnen des thermoplastischen Harzblatts auf einer Oberfläche einer oberen Oberflächenseite und/oder einer unteren Oberflächenseite der Prepregs;
einen Schritt des Erhaltens einer an dem thermoplastischen Harzblatt befestigten Sandwichplatte durch gemeinsames Laminieren der Kernschicht, der Prepregs und des thermoplastischen Harzblatts durch eine Erhitzungs- und Druckbeaufschlagungsbehandlung, in der, beim Pressen einer flachen Oberfläche einer Metallplatte als eine Pressplatte auf das thermoplastische Harzblatt, die Metallplatte durch eine Pressplatte einer mechanischen Presse erhitzt und gepresst wird; und
einen Schritt des Trennens der Metallplatten,
wobei der Herstellungsschritt einen Schritt des Durchführens einer Oberflächenbehandlung beinhaltet, die eine oder mehrere beinhaltet, die aus der Gruppe ausgewählt ist/sind, die aus Folgendem besteht: einer Koronabehandlung, einer Plasmabehandlung, einer Flammbehandlung und einer Grundierungsbehandlung auf einer Oberfläche des thermoplatischen Harzblatts, das dem Prepreg zugewandt ist.

2. Verfahren zum Herstellen einer Sandwichplatte nach Anspruch 1,
wobei der Schritt des Anordnens des thermoplastischen Harzblatts einen Schritt des Ausbildens eines Klebstoffs zwischen dem Prepreg und dem thermoplastischen Harzblatt umfasst, und
der Klebstoff einen oder mehrere umfasst, der/die aus der Gruppe ausgewählt ist/sind, die aus Folgendem besteht: einem Klebstoff auf Urethanbasis, einem Klebstoff auf Epoxidbasis, einem Acrylklebstoff, einem Klebstoff auf Kautschukbasis und einem Klebstoff auf Phenolbasis.

3. Verfahren zum Herstellen einer Sandwichplatte nach Anspruch 1 oder 2,
wobei das thermoplastische Harzblatt ein halogenhaltiges thermoplastisches Harz beinhaltet.

4. Verfahren zum Herstellen einer Sandwichplatte nach Anspruch 3,
wobei das halogenhaltige thermoplastische Harz eines oder mehrere beinhaltet, das/die aus der Gruppe ausgewählt ist/sind, die aus Folgendem besteht: Polyvinylfluorid (PVF), Polyvinylidenfluorid (PVDF), Polychlortrifluorethylen (PCTFE) und Polytetrafluorethylen (PTFE).

5. Verfahren zum Herstellen einer Sandwichplatte nach einem der Ansprüche 1 bis 4,
wobei der Schritt des Erhaltens der an dem thermoplastischen Harzblatt befestigten Sandwichplatte einen Schritt des Durchführens des Erhitzens und des Druckbeaufschlagens durch Sandwiching der Kernschicht, der Prepregs und des thermoplastischen Harzblatts unter Verwendung von Metallplatten beinhaltet.

6. Verfahren zum Herstellen einer Sandwichplatte nach einem der Ansprüche 1 bis 5,
wobei die Metallplatte eine SUS-Platte ist.

7. Verfahren zum Herstellen einer Sandwichplatte nach einem der Ansprüche 1 bis 6,
wobei eine Druckbeaufschlagungskraft bei der Druckbeaufschlagungsbehandlung wenigstens 0,35 MPa und höchstens 2,0 MPa beträgt.

8. Verfahren zum Herstellen einer Sandwichplatte nach einem der Ansprüche 1 bis 7,
wobei eine Erhitzungstemperatur bei der Druckbeaufschlagungsbehandlung wenigstens 110 °C und höchstens 140 °C beträgt.

9. Verfahren zum Herstellen einer Sandwichplatte nach einem der Ansprüche 1 bis 8,
wobei, während des Erhitzens und des Druckbeaufschlagens der Prepregs, ein Harz, das die Prepregs darstellt, auf eine Innenwandoberfläche der Wabenstruktur der Kernschicht bewegt wird.

10. Verfahren zum Herstellen einer Sandwichplatte nach einem der Ansprüche 1 bis 9,
wobei das Prepreg ein Blattelement in einem Zustand der B-Stufe ist, das durch Einweichen einer wärmehärtenden Harzzusammensetzung in ein Faserbasismaterial ausgebildet wird.

11. Verfahren zum Herstellen einer Sandwichplatte nach Anspruch 10,
wobei die wärmehartbare Harzzusammensetzung ein Phenolharz beinhaltet.

12. Verfahren zum Herstellen einer Sandwichplatte nach einem der Ansprüche 1 bis 11,
wobei eine Klebstoffschicht nicht zwischen der Kernschicht und dem Prepreg angeordnet ist.

13. Verfahren zum Herstellen einer Sandwichplatte nach einem der Ansprüche 1 bis 12,
wobei eine Entformungsschicht nicht zwischen dem Prepreg und der Metallplatte angeordnet ist.

14. Verfahren zum Herstellen einer Sandwichplatte nach einem der Ansprüche 1 bis 13, wobei ein Bestandteil der Kernschicht eine Aramidfaser beinhaltet.

15. Verfahren zum Herstellen einer Sandwichplatte nach einem der Ansprüche 1 bis 14, ferner umfassend:
einen Schritt eines Schneidens der erhaltenen Sandwichplatte.

16. Verfahren zum Herstellen einer Sandwichplatte nach einem der Ansprüche 1 bis 15, wobei die Sandwichplatte für eine Luftfahrzeugplatte verwendet wird.

## Revendications

1. Procédé de fabrication d'un panneau sandwich comprenant :
une étape de préparation consistant à préparer une couche centrale de type feuille ayant une structure en nid d'abeille, des préimprégnés de type feuille et une feuille de résine thermoplastique ;
une étape consistant à disposer les préimprégnés sur des surfaces d'ouverture de la couche centrale sur un côté de surface supérieure et sur un côté de surface inférieure respectivement, et à disposer la feuille de résine thermoplastique sur une surface d'un côté de surface supérieure et/ou d'un côté de surface inférieure des préimprégnés ;
une étape consistant à obtenir un panneau sandwich fixé à une feuille de résine thermoplastique en stratifiant collectivement la couche centrale, les préimprégnés et la feuille de résine thermoplastique par un traitement thermique et de mise sous pression dans lequel, tout en pressant une surface plane d'une plaque métallique comme plaque de pression sur la feuille de résine thermoplastique, la plaque métallique est chauffée et pressée par une plaque de presse d'une presse mécanique ; et
une étape consistant à séparer les plaques métalliques,
l'étape de préparation comportant une étape consistant à effectuer un traitement de surface comportant un ou plusieurs traitements choisis dans le groupe constitué d'un traitement corona, d'un traitement plasma, d'un flammage et d'un traitement primaire sur une surface de la feuille de résine thermoplastique faisant face au préimprégné.

2. Procédé de fabrication d'un panneau sandwich selon la revendication 1,
l'étape de disposition de la feuille de résine thermoplastique comportant une étape de formation d'un adhésif entre le préimprégné et la feuille de résine thermoplastique, et
l'adhésif comportant un ou plusieurs adhésifs choisis dans le groupe constitué d'un adhésif à base d'uréthane, d'un adhésif à base de résine époxy, d'un adhésif acrylique, d'un adhésif à base de caoutchouc et d'un adhésif à base de phénol.

3. Procédé de fabrication d'un panneau sandwich selon la revendication 1 ou 2,
la feuille de résine thermoplastique comportant une résine thermoplastique contenant un halogène.

4. Procédé de fabrication d'un panneau sandwich selon la revendication 3,
la résine thermoplastique contenant un halogène comportant un ou plusieurs éléments choisis dans le groupe constitué de polyfluorure de vinyle (PVF), de polyfluorure de vinylidène (PVDF), de polychlorotrifluoroéthylène (PCTFE), et de polytétrafluoroéthylène (PTFE).

5. Procédé de fabrication d'un panneau sandwich selon l'une quelconque des revendications 1 à 4,
l'étape d'obtention du panneau sandwich fixé à une feuille de résine thermoplastique comportant une étape consistant à chauffer et mettre sous pression en prenant en sandwich la couche centrale, les préimprégnés et la feuille de résine thermoplastique à l'aide de plaques métalliques.

6. Procédé de fabrication d'un panneau sandwich selon l'une quelconque des revendications 1 à 5,
la plaque métallique étant une plaque SUS.

7. Procédé de fabrication d'un panneau sandwich selon l'une quelconque des revendications 1 à 6,
une force de mise sous pression dans le traitement de mise sous pression étant égale ou supérieure à 0,35 MPa et égale ou inférieure à 2,0 MPa.

8. Procédé de fabrication d'un panneau sandwich selon l'une quelconque des revendications 1 à 7,
une température de chauffage dans le traitement de mise sous pression étant égale ou supérieure à 110 °C et égale ou inférieure à 140 °C.

9. Procédé de fabrication d'un panneau sandwich selon l'une quelconque des revendications 1 à 8,
pendant le chauffage et la mise sous pression des préimprégnés, une résine constituant les préimprégnés étant déplacée sur une surface de paroi intérieure de la structure en nid d'abeilles de la couche centrale.

10. Procédé de fabrication d'un panneau sandwich selon l'une quelconque des revendications 1 à 9,
le préimprégné étant un élément de feuille dans un état d'étape B qui est formé par trempage d'une composition de résine thermodurcissable dans un matériau de base fibreux.

11. Procédé de fabrication d'un panneau sandwich selon la revendication 10,
la composition de résine thermodurcissable comportant une résine phénolique.

12. Procédé de fabrication d'un panneau sandwich selon l'une quelconque des revendications 1 à 11,
une couche adhésive n'étant pas disposée entre la couche centrale et le préimprégné.

13. Procédé de fabrication d'un panneau sandwich selon l'une quelconque des revendications 1 à 12,
une couche de lubrifiant de moule n'étant pas disposée entre le préimprégné et la plaque métallique.

14. Procédé de fabrication d'un panneau sandwich selon l'une quelconque des revendications 1 à 13,
un matériau constitutif de la couche centrale comportant une fibre aramide.

15. Procédé de fabrication d'un panneau sandwich selon l'une quelconque des revendications 1 à 14, comprenant en outre :
une étape consistant à découper le panneau sandwich obtenu.

16. Procédé de fabrication d'un panneau sandwich selon l'une quelconque des revendications 1 à 15,
le panneau sandwich étant utilisé pour un panneau d'aéronef.
